# EUROPEAN PATENT APPLICATION

(11) **EP 4 718 250 A1**
(43) Date of publication of application: **01.04.2026**
(21) Application number: 24835133.0
(22) Date of filing: 13.05.2024
(51) Int. Cl.: G06F 9/48

(54) **COMPUTING TASK SCHEDULING METHOD AND COMMUNICATION APPARATUS**

(30) Priority: 06.07.2023 CN 202310833798
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN); LOU, Chong, Shenzhen, Guangdong 518129 (CN)
(74) Representative: MERH-IP Matias Erny Reichl Hoffmann Patentanwälte PartG mbB
(86) International application number: PCT/CN2024/092931
(87) International publication number: WO 2025/007648

(57) **Abstract**

A computing task scheduling method and a communication apparatus are provided, to improve network computing power utilization and transmission resource utilization in a computing task scheduling process. The method includes: receiving first information, where the first information indicates a requirement on a computing task of a first apparatus, and the computing task includes at least one subtask; and sending second information in response to the first information, where the second information indicates one or more subtasks in the at least one subtask scheduled to a first computing node.

## Description

This application claims priority to Chinese Patent Application No. 202310833798.7, filed with the China National Intellectual Property Administration on July 6, 2023 and entitled "COMPUTING TASK SCHEDULING METHOD AND COMMUNICATION APPARATUS", which is incorporated herein by reference in its entirety.

### TECHNICAL FIELD+

Embodiments of this application relate to the communication field, and in particular, to a computing task scheduling method and a communication apparatus.

### BACKGROUND

As industries such as healthcare, factories, ports, coal mines, and governments and enterprises accelerate digital transformation, computing and communication are becoming a core and basic capability that enables intelligent digital transformation of the industries. Therefore, operators propose a concept of a computing power network, and organize and hold standardization discussions in the 3rd generation partnership project (3rd generation partnership project, 3GPP). The computing power network is to sense ubiquitous computing and services through the network and schedule computing tasks to appropriate computing nodes for processing, to improve network resource utilization and computing resource utilization, and also provide low-delay and high-reliability services for users, so as to ensure user experience.

In a computing power network architecture used to schedule a computing task, it is a computing management function (computing management function, CMF) to perform functions such as computing power sensing, computing service sensing, network status sensing, and computing task scheduling. However, in the computing task scheduling process, network computing power utilization and transmission resource utilization are low.

### SUMMARY

Embodiments of this application provide a computing task scheduling method and a communication apparatus, to improve network computing power utilization and transmission resource utilization in a computing task scheduling process.

To achieve the foregoing objective, this application uses the following technical solutions.

According to a first aspect, a computing task scheduling method is provided. The method may be performed by a computing management function, may be performed by a component of the computing management function, for example, a processor, a chip, or a chip system of the computing management function, or may be implemented by a logic module or software that can implement all or some computing management functions. The following uses an example in which the method is performed by the computing management function for description. The method includes: receiving first information, where the first information indicates a requirement on a computing task of a first apparatus, and the computing task includes at least one subtask; and sending second information in response to the first information, where the second information indicates one or more subtasks in the at least one subtask scheduled to a first computing node.

According to the computing task scheduling method, the computing task (for example, a complex application like AR, VR, or machine vision) is divided into a plurality of subtasks. The computing management function may determine computing and communication requirements on the subtasks in the computing task based on the received first information, and schedule, based on the computing and communication requirements on the subtasks, the plurality of subtasks to one or more appropriate computing nodes for execution by using the second information, so that computing power resource utilization and transmission resource utilization can be improved, and service experience of a user can also be ensured.

In a possible design solution, the technical solution provided in this embodiment of this application may further include: determining one or more computing nodes and second information corresponding to each of the computing nodes, where the one or more computing nodes include the first computing node. According to this design solution, the subtasks in the computing task may be scheduled to the one or more appropriate computing nodes for execution, so that the computing power resource utilization and the transmission resource utilization can be improved.

In a possible design solution, the first information may further indicate an association relationship between each subtask in the computing task and a previous subtask and/or a subsequent subtask. According to this design solution, an execution sequence and a transmission requirement between the subtasks may be determined by indicating the association relationship between each subtask in the computing task and the previous subtask and/or the subsequent subtask, to improve scheduling accuracy.

In a possible design solution, the association relationship may include at least one of the following: a data transmission direction, a data transmission rate requirement, a data throughput requirement, a data transmission delay requirement, or a data transmission bandwidth requirement.

In a possible design solution, the computing task may include a first subtask, input data of the first subtask is output data of a previous subtask corresponding to the first subtask, and output data of the first subtask is input data of a subsequent subtask corresponding to the first subtask.

In a possible design solution, the one or more subtasks may include a second subtask, and the second information corresponding to the first computing node includes requirement information of the second subtask and association information of the second subtask. The requirement information indicates a computing requirement that needs to be met to complete the second subtask, and the association information indicates a transmission requirement between the second subtask and a previous subtask and/or a subsequent subtask corresponding to the second subtask.

In a possible design solution, the requirement information may include at least one of the following: a computing delay requirement, a computing power requirement, a computing precision requirement, a computing energy consumption requirement, or a priority of the second subtask.

In a possible design solution, the association information may include at least one of the following: a data transmission direction between the second subtask and the previous subtask and/or the subsequent subtask corresponding to the second subtask, a data transmission rate requirement between the second subtask and the previous subtask and/or the subsequent subtask corresponding to the second subtask, a data throughput requirement between the second subtask and the previous subtask and/or the subsequent subtask corresponding to the second subtask, a data transmission delay requirement between the second subtask and the previous subtask and/or the subsequent subtask corresponding to the second subtask, a data transmission bandwidth requirement between the second subtask and the previous subtask and/or the subsequent subtask corresponding to the second subtask, position information of a computing node that executes the previous subtask corresponding to the second subtask, or position information of a computing node that executes the subsequent subtask corresponding to the second subtask.

In a possible design solution, the computing task is represented by using a directed acyclic graph, each vertex in the directed acyclic graph includes requirement information of one subtask in the computing task, and each edge in the directed acyclic graph includes association information between one subtask in the computing task and a corresponding previous subtask and/or subsequent subtask.

In a possible design solution, the requirement on the computing task may include at least one of the following: a type of the computing task, an input data rate, an output data rate, a computing delay, computing power, computing precision, or computing energy consumption.

In a possible design solution, the first apparatus and the first computing node are deployed in a wireless communication network.

In a possible design solution, the first apparatus and the first computing node may be terminal devices, access network devices, core network devices, or mobile edge computing platforms.

According to a second aspect, a computing task scheduling method is provided. The method may be performed by a first apparatus, may be performed by a component of the first apparatus, for example, a processor, a chip, or a chip system of the first apparatus, or may be implemented by a logic module or software that can implement all or some functions of the first apparatus. The following uses an example in which the method is performed by the first apparatus for description. The method includes: sending first information, where the first information indicates a requirement on a computing task of the first apparatus, and the computing task includes at least one subtask; receiving third information, where the third information includes an identifier of a first computing node and second information corresponding to the first computing node, and the second information indicates one or more subtasks in the at least one subtask scheduled to the first computing node; and sending the second information.

In a possible design solution, the first computing node is one of one or more computing nodes that are scheduled to complete the computing task.

In a possible design solution, the one or more computing nodes include a second computing node. The method provided in this embodiment of this application may further include: sending first data to the second computing node, where the first data is used to complete a subtask scheduled to the second computing node.

In a possible design solution, the first information may further indicate an association relationship between each subtask in the computing task and a previous subtask and/or a subsequent subtask.

In a possible design solution, the association relationship may include at least one of the following: a data transmission direction, a data transmission rate requirement, a data throughput requirement, a data transmission delay requirement, or a data transmission bandwidth requirement.

In a possible design solution, the computing task may include a first subtask, input data of the first subtask is output data of a previous subtask corresponding to the first subtask, and output data of the first subtask is input data of a subsequent subtask corresponding to the first subtask.

In a possible design solution, the one or more subtasks may include a second subtask, and the second information corresponding to the first computing node includes requirement information of the second subtask and association information of the second subtask. The requirement information indicates a computing requirement that needs to be met to complete the second subtask, and the association information indicates a transmission requirement between the second subtask and a previous subtask and/or a subsequent subtask corresponding to the second subtask.

In a possible design solution, the requirement information may include at least one of the following: a computing delay requirement, a computing power requirement, a computing precision requirement, a computing energy consumption requirement, or a priority of the second subtask.

In a possible design solution, the association information may include at least one of the following: a data transmission direction between the second subtask and the previous subtask and/or the subsequent subtask corresponding to the second subtask, a data transmission rate requirement between the second subtask and the previous subtask and/or the subsequent subtask corresponding to the second subtask, a data throughput requirement between the second subtask and the previous subtask and/or the subsequent subtask corresponding to the second subtask, a data transmission delay requirement between the second subtask and the previous subtask and/or the subsequent subtask corresponding to the second subtask, a data transmission bandwidth requirement between the second subtask and the previous subtask and/or the subsequent subtask corresponding to the second subtask, position information of a computing node that executes the previous subtask corresponding to the second subtask, or position information of a computing node that executes the subsequent subtask corresponding to the second subtask.

In a possible design solution, the computing task is represented by using a directed acyclic graph, each vertex in the directed acyclic graph includes requirement information of one subtask in the computing task, and each edge in the directed acyclic graph includes association information between one subtask in the computing task and a corresponding previous subtask and/or subsequent subtask.

In a possible design solution, the requirement on the computing task may include at least one of the following: a type of the computing task, an input data rate, an output data rate, a computing delay, computing power, computing precision, or computing energy consumption.

In a possible design solution, the first apparatus and the first computing node are deployed in a wireless communication network.

In a possible design solution, the first apparatus and the first computing node may be terminal devices, access network devices, core network devices, or mobile edge computing platforms.

For technical effects of the method according to the second aspect, refer to the technical effects of the method according to the first aspect. Details are not described herein again.

According to a third aspect, a computing task scheduling method is provided. The method includes: A computing management function receives first information, where the first information indicates a requirement on a computing task of a first apparatus, and the computing task includes at least one subtask; and the computing management function sends second information to a first computing node in response to the first information, where the second information indicates one or more subtasks in the at least one subtask scheduled to the first computing node.

According to a fourth aspect, a computing task scheduling method is provided. The method includes: A first apparatus sends first information to a computing management function, where the first information indicates a requirement on a computing task of the first apparatus, and the computing task includes at least one subtask; and the computing management function receives the first information from the first apparatus, and sends second information to a first computing node in response to the first information, where the second information indicates one or more subtasks in the at least one subtask scheduled to the first computing node.

According to a fifth aspect, a computing task scheduling method is provided. The method includes: A first apparatus sends first information to a computing management function, where the first information indicates a requirement on a computing task of the first apparatus, and the computing task includes at least one subtask; the computing management function receives the first information from the first apparatus, and sends third information to the first apparatus in response to the first information, where the third information includes a first computing node and second information corresponding to the first computing node, and the second information indicates one or more subtasks in the at least one subtask scheduled to the first computing node; and the first apparatus sends the second information to the first computing node.

For technical effects of the method according to any one of the third aspect to the fifth aspect, refer to the technical effects of the method according to the first aspect. Details are not described herein again.

According to a sixth aspect, a communication apparatus is provided, configured to implement the foregoing methods. The communication apparatus may be the computing management function in the first aspect, an apparatus including the computing management function, or an apparatus included in the computing management function, for example, a chip. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to receive first information, where the first information indicates a requirement on a computing task of a first apparatus, and the computing task includes at least one subtask. The processing module is further configured to control, in response to the first information, the transceiver module to send second information, where the second information indicates one or more subtasks in the at least one subtask scheduled to a first computing node. For more detailed descriptions of the communication apparatus, refer to descriptions of the related method according to the first aspect.

According to a seventh aspect, a communication apparatus is provided, configured to implement the foregoing methods. The communication apparatus may be the first apparatus in the second aspect, an apparatus including the first apparatus, or an apparatus included in the first apparatus, for example, a chip. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to send first information, where the first information indicates a requirement on a computing task of the first apparatus, and the computing task includes at least one subtask. The processing module is further configured to control the transceiver module to receive third information, where the third information includes a first computing node and second information corresponding to the first computing node, and the second information indicates one or more subtasks in the at least one subtask scheduled to the first computing node. The processing module is further configured to control the transceiver module to send the second information. For more detailed descriptions of the communication apparatus, refer to descriptions of the related method according to the second aspect.

With reference to the sixth aspect or the seventh aspect, in a possible design solution, the transceiver module may include a receiving module and a sending module. The sending module is configured to implement a sending function of the communication apparatus according to the sixth aspect or the seventh aspect, and the receiving module is configured to implement a receiving function of the communication apparatus according to the sixth aspect or the seventh aspect.

With reference to the sixth aspect or the seventh aspect, in a possible design solution, the communication apparatus according to the sixth aspect or the seventh aspect may further include a storage module, and the storage module stores a program or instructions. When the processing module executes the program or the instructions, the communication apparatus according to the sixth aspect or the seventh aspect is enabled to perform the method according to the first aspect or the second aspect.

According to an eighth aspect, a communication apparatus is provided (for example, the communication apparatus may be a chip or a chip system). The communication apparatus includes a processor, configured to implement functions in any one of the foregoing aspects.

In a possible design solution, the communication apparatus may further include a memory. The memory is configured to store necessary program instructions and data. The processor is coupled to the memory, and the processor is configured to execute a computer program or the instructions stored in the memory, to enable the communication apparatus to perform the method according to any one of the possible implementations of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible design solution, the processor may be integrated with the memory.

In some possible designs, when the apparatus is a chip system, the apparatus may include a chip, or may include a chip and another discrete component.

According to a ninth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect or the second aspect through a logic circuit or by executing code instructions.

According to a tenth aspect, a communication apparatus is provided. The communication apparatus may be a computing management function, may be a module or unit (for example, a chip, a chip system, or a circuit) that is in the computing management function and that is in one-to-one correspondence with the method/operation/step/action described in the first aspect, or can be used together with the computing management function. Alternatively, the communication apparatus may be a first apparatus, may be a module or unit (for example, a chip, a chip system, or a circuit) that is in the first apparatus and that is in one-to-one correspondence with the method/operation/step/action described in the first aspect, or can be used together with the first apparatus.

It may be understood that, when the communication apparatus provided in either the eighth aspect or the tenth aspect is a chip, the foregoing sending action/function may be understood as an output, and the foregoing receiving action/function may be understood as an input.

According to an eleventh aspect, a computer-readable storage medium is provided. The computer-readable storage medium stores a computer program or instructions. When the computer program or the instructions are run on a communication apparatus, the communication apparatus is enabled to perform the method according to either the first aspect or the second aspect.

According to a twelfth aspect, a computer program product including instructions is provided, including computer program code. When the computer program code is run on a communication apparatus, the communication apparatus is enabled to perform the method according to either the first aspect or the second aspect.

According to a thirteenth aspect, a communication system is provided, including a computing management function configured to implement the method according to the first aspect and a first apparatus configured to implement the method according to the second aspect.

### BRIEF DESCRIPTION OF DRAWINGS

FIG. 1 is a diagram of an architecture of an XaaS system according to an embodiment of this application;
FIG. 2 is a schematic flowchart of an AR application and a facial recognition application according to an embodiment of this application;
FIG. 3 is a diagram of a computing power network architecture that can be used to schedule a computing task according to an embodiment of this application;
FIG. 4 is a diagram of an architecture of a computing task scheduling system according to an embodiment of this application;
FIG. 5 is a diagram of an architecture of a communication system applicable to a computing task scheduling system according to an embodiment of this application;
FIG. 6 is a diagram of an architecture of a 5GS according to an embodiment of this application;
FIG. 7 is a diagram of an architecture of an access network device based on CU-DU split according to an embodiment of this application;
FIG. 8 is a diagram of a structure of an access network device based on an O-RAN architecture according to an embodiment of this application;
FIG. 9 is a schematic flowchart of a computing task scheduling method according to an embodiment of this application;
FIG. 10 is a diagram of a structure of three DAG modeling-based computing tasks according to an embodiment of this application;
FIG. 11 is a diagram of an execution structure of an AR rendering task according to an embodiment of this application;
FIG. 12 is a schematic flowchart of another computing task scheduling method according to an embodiment of this application;
FIG. 13 is a schematic flowchart of still another computing task scheduling method according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

For better understanding of embodiments of this application, the following several items are described before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by the indication information is referred to as to-be-indicated information. In a specific implementation process, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of various pieces of information that is pre-agreed on (for example, stipulated in a protocol), to reduce indication overheads to some extent. In addition, a common part of various pieces of information may be further identified and indicated in a unified manner, to reduce indication overheads caused by separately indicating same information.

In addition, specific indication manners may alternatively be various existing indication manners, for example, but not limited to, the foregoing indication manners and various combinations thereof. For details of various indication manners, refer to related descriptions in an existing implementation. Details are not described again in this specification. It can be learned from the foregoing descriptions that, for example, when a plurality of pieces of information of a same type need to be indicated, different information may be indicated in different manners. In a specific implementation process, a needed indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

The to-be-indicated information may be sent together as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC-control element (control element, CE). The physical (physical, PHY) layer signaling includes, for example, downlink control information (downlink control information, DCI).

Second, in embodiments of this application, "first", "second", and various numeric numbers are merely used for differentiation for ease of description, and are not used to limit the scope of embodiments of this application, for example, for distinguishing between different indication information. For another example, a first network area and a second network area are merely intended to distinguish between different areas, and are not intended to limit a sequence thereof. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", "provided that", and "if" all mean that a device (for example, a terminal device or a network device) performs corresponding processing in an objective situation, are not intended to limit time, do not require that the device (for example, the terminal device or the network device) should have a determining action during implementation, and do not mean that there are other limitations.

Fourth, in embodiments of this application, the term "example", "for example", or the like is used to represent giving an example, an illustration, or descriptions. Any embodiment or design solution described as an "example" or with "for example" in embodiments of this application should not be explained as being more preferred or having more advantages than another embodiment or design solution. Exactly, use of the term "example", "for example", or the like is intended to present a related concept in a specific manner for ease of understanding.

Fifth, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of a plurality of items, including a singular item (piece) or any combination of plural items (pieces). For example, at least one item (piece) of a, b, or c may represent a, b, c, a and b, a and c, b and c, or a, b, and c, where a, b, and c may be singular or plural.

Communication systems, applicable network elements, and related terms are described.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a worldwide interoperability for microwave access (worldwide interoperability for microwave access, WiMAX) communication system, a 4th generation (4th generation, 4G) mobile communication system, for example, a long term evolution (long term evolution, LTE) system and a worldwide interoperability for microwave access (worldwide interoperability for microwave access, WiMAX) communication system, a fifth generation (5th generation, 5G) mobile communication system, for example, a new radio (new radio, NR) system, and a future communication system, for example, a sixth generation (sixth generation, 6G) mobile communication system.

As industries such as healthcare, factories, ports, coal mines, and governments and enterprises accelerate digital transformation, computing and communication are becoming a core and basic capability that enables intelligent digital transformation of the industries. Therefore, operators propose a concept of a computing power network, and organize and hold standardization discussions in 3GPP. A meaning of the computing power network is to sense ubiquitous computing and services through the network and schedule computing tasks to appropriate computing nodes for processing, to improve network resource utilization and computing resource utilization, and also provide low-delay and high-reliability services for users, so as to ensure user experience.

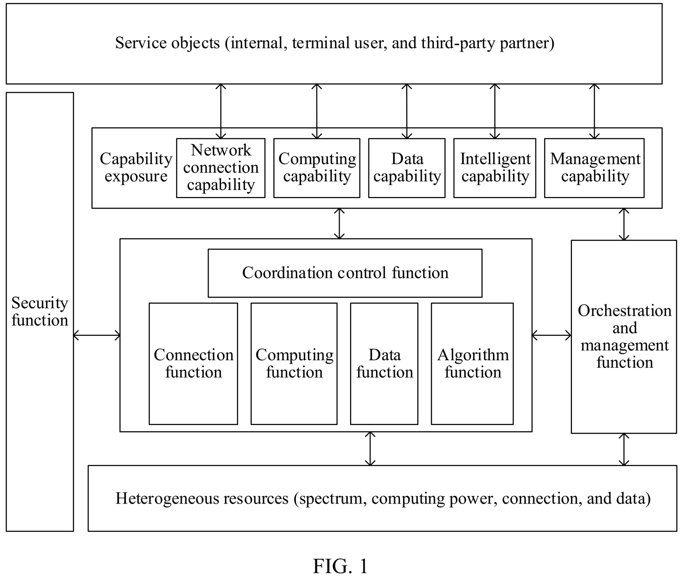

To meet requirements on a 6G network and a future service, an IMT-2030 (6G) promotion group believes that a 6G service is to be immersive and intelligent, and include a combination of extended reality (extended reality, XR) and holography, to achieve natural and vivid visual reproduction and three-dimensional dynamic interaction between people, things, and environments. Agents such as personal/home devices, unmanned vehicles, and robots generate a large amount of data for artificial intelligence (artificial intelligence, AI) learning, training, inference, and the like. The 6G network needs to support AI resource scheduling and processing of an ultra-large data amount to reduce a computing amount and energy consumption of a terminal, so as to meet requirements for terminal capabilities that are lighter, more immersive, and more intelligent. Therefore, an X as a service (X as a service, XaaS) system architecture shown in FIG. 1 is proposed. In this system architecture, a communication device has capability exposure, coordination control, orchestration and management, and security functions, so that a 6G network architecture changes from "connection-centric" to "task-centric".

A conventional "connection-centric" network architecture aims to provide connection channels needed for data communication between terminals and between the terminal and an application server, a corresponding life cycle management mechanism (for example, creation, modification, deletion, and anchor migration of an end-to-end communication tunnel), and communication quality of service (quality of service, QoS) assurance. A "task-centric" network architecture coordinates and schedules computing power, connections, algorithms, and data resources of a plurality of nodes, to jointly achieve a specific goal. The 6G network is to introduce new computing power and a new storage resource, a new AI computing type, new AI input and output data types, a new AI-model-related algorithm, and a new collaboration mechanism of computing power, algorithms, and data of a plurality of nodes.

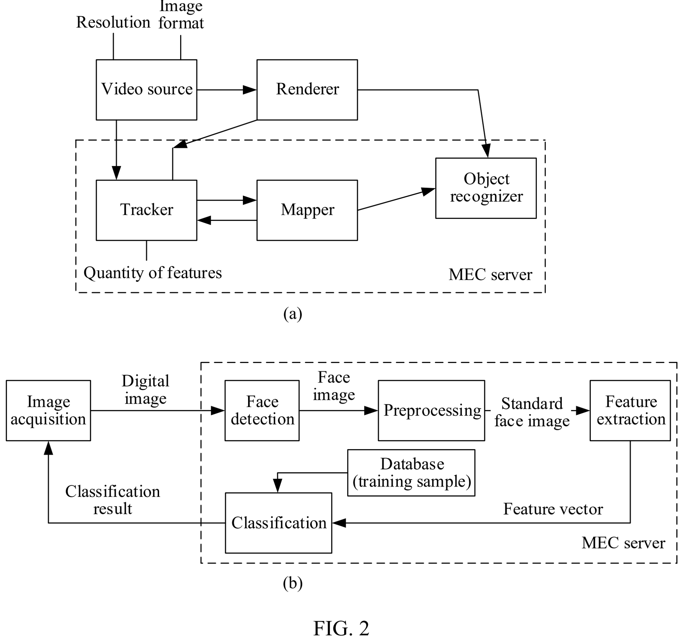

A computing service application may include a large quantity of functional components that have a dependency relationship. For example, computing tasks such as augmented reality (augmented reality, AR) recognition, virtual reality (virtual reality, VR) rendering, and machine vision generally include a plurality of steps or components, outputs of some components are inputs of other components, and some functions or processes can be offloaded to a server for remote execution, while some functions or processes can only be executed locally, for example, an image display function. As shown in (a) in FIG. 2, key components of an AR application include a video source (obtaining an original video frame from a mobile camera), a tracker (tracking a position of a user), a mapper (building an environment model), an object recognizer (recognizing a known object in an environment), and a renderer (preparing a processed frame for display). As shown in (b) in FIG. 2, a facial recognition application includes main execution steps such as image acquisition, face detection, preprocessing, feature extraction, and classification. There is a dependency relationship between the execution steps. For example, an output (a digital image) of image acquisition is an input for performing face detection.

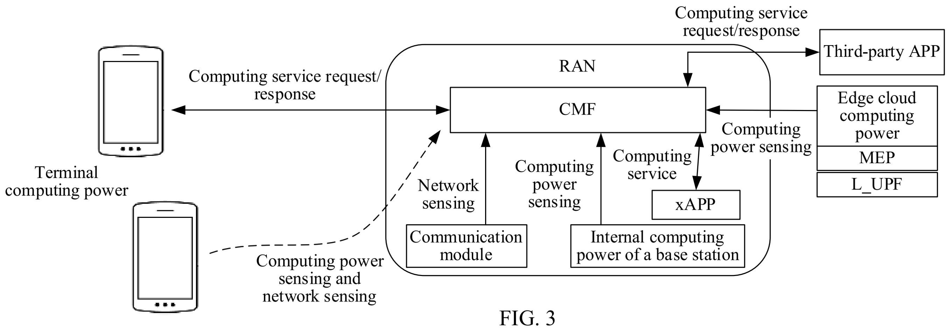

FIG. 3 shows a computing power network architecture that can be used to schedule a computing task. The computing power network architecture uses a connection capability of a wireless network and computing power that widely exists in a network, to provide high-performance computing power, low-delay transmission, and intelligent service assurance services for diversified computing services. In the architecture shown in FIG. 3, a CMF is deployed on a radio access network (radio access network, RAN) side to perform functions such as computing power sensing, computing service sensing, network status sensing, and computing task scheduling. The CMF may schedule a service initiated by a network element, an external network, or a third-party application to computing nodes such as a terminal, a mobile edge computing (mobile edge computing, MEC) platform, a cloud server, and a next generation NodeB (next generation NodeB, gNB) in fifth generation (5th generation, 5G) for execution. However, in a computing task scheduling process, network computing power utilization and transmission resource utilization are low.

Therefore, embodiments of this application provide a computing task scheduling method, to flexibly and fully use a computing power resource and a transmission resource of each node in the network, so as to improve the network computing power utilization and the transmission resource utilization.

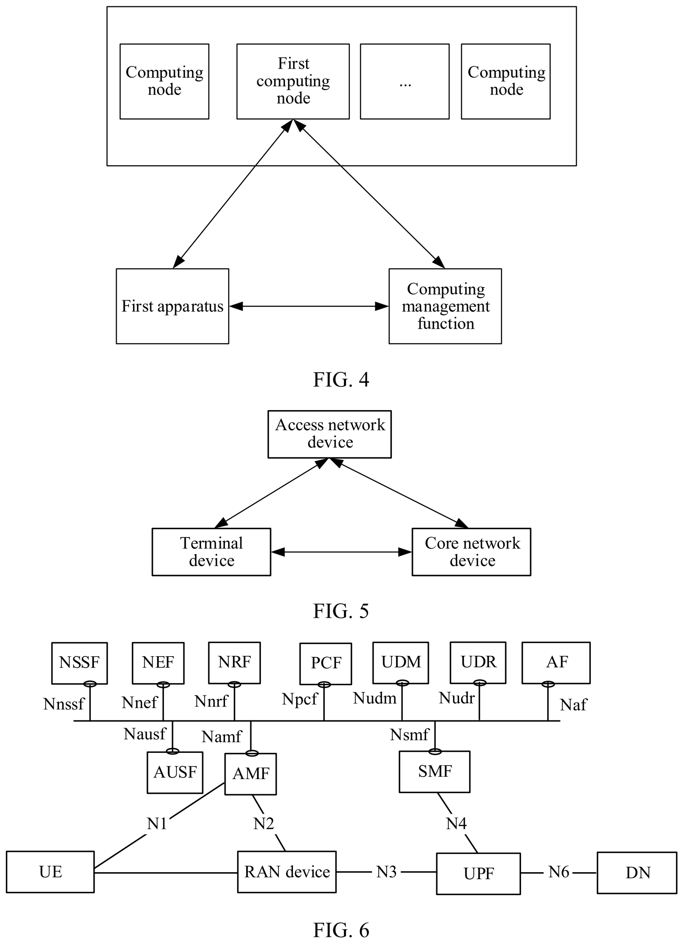

For example, FIG. 4 is a diagram of an architecture of a computing task scheduling system according to an embodiment of this application. As shown in FIG. 4, the computing task scheduling system includes a first apparatus, a computing management function, and a first computing node. The first computing node is one of one or more computing nodes that execute a computing task. The first apparatus is configured to initiate a computing task request. The computing management function is configured to schedule and manage the computing task. Each two of the first apparatus, the computing management function, and the first computing node may communicate with each other.

In a possible design solution, the first apparatus sends first information to the computing management function. The first information indicates a requirement on a computing task of the first apparatus, and the computing task includes at least one subtask. Correspondingly, the computing management function receives the first information from the first apparatus, and sends second information to the first computing node in response to the first information. The second information indicates one or more subtasks in the at least one subtask scheduled to the first computing node. For a specific implementation process, refer to related descriptions in the following method embodiments.

In another possible design solution, the first apparatus sends first information to the computing management function. The first information indicates a requirement on a computing task of the first apparatus, and the computing task includes at least one subtask. Correspondingly, the computing management function receives the first information from the first apparatus, and sends third information to the first apparatus in response to the first information. The third information includes the first computing node and second information corresponding to the first computing node, and the second information indicates one or more subtasks in the at least one subtask scheduled to the first computing node. Then, the first apparatus sends the second information to the first computing node. For a specific implementation process, refer to related descriptions in the following method embodiments.

In a possible implementation, the first apparatus may alternatively be used as one of the one or more computing nodes that execute the computing task. For example, the first apparatus is the first computing node or another computing node.

In this embodiment of this application, the first apparatus and the computing node have computing capabilities, and may be terminal devices, access network devices, core network devices, or applications (applications, APPs) (for example, xAPPs or 3rd Apps) deployed in a communication network, or mobile edge computing platforms (MEC platforms, MEPs), application servers, or the like deployed in a data network.

The computing management function has one or more of the following functions: computing power sensing, computing service sensing, network status sensing, or computing task scheduling, so that computing power resources can be orchestrated and managed.

In the computing task scheduling system provided in this embodiment of this application, a computing management function network element may be introduced to implement some or all operations related to the computing management function. The computing management function network element may also be referred to as a computing management function node, a computing management function device, a computing management function entity, a computing management function module, a computing management function model, a computing management function unit, or the like. The computing management function network element may be built in a network element of a communication system. For example, the computing management function network element may be a computing management function module built in a terminal device, an access network device, a core network device, a cloud server, or an operation, administration and maintenance (operation, administration and maintenance, OAM) (which may be referred to as a network management system), to implement a function related to the computing management function. The OAM may be used as a network management system of a core network device and/or a network management system of an access network device. Alternatively, the computing management function network element may be an independently disposed network element in the communication system. Optionally, the terminal device or a chip built in the terminal device may also include the computing management function entity, configured to implement the function related to the computing management function. Optionally, the computing management function may be referred to as a CMF or another name. This is not limited in this application.

For example, FIG. 5 is a diagram of an architecture of a wireless communication system applicable to the foregoing computing task scheduling system according to an embodiment of this application. As shown in FIG. 5, the wireless communication system includes a terminal device, an access network device, and a core network device, and communication may be performed between the three devices.

### 1. Terminal device

There may be one or more terminal devices, such as a first terminal device, a second terminal device, and a third terminal device. The terminal device may be a terminal device having receiving and sending functions, or may be a chip or a chip system disposed in the terminal device. The terminal device may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in this embodiment of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a VR terminal, an AR terminal, a smart home device (for example, a refrigerator, a television, an air conditioner, or an electric meter), a smart robot, a robot arm, a workshop device, a wireless terminal in self driving, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a roadside unit (roadside unit, RSU) or the like having a terminal function, a flight device (for example, a smart robot, a hot air balloon, an uncrewed aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The terminal device may alternatively be another device having a terminal function. For example, the terminal device may alternatively be a device that functions as a terminal in D2D communication.

A device form of the terminal is not limited in this embodiment of this application. An apparatus configured to implement a function of the terminal device may be a terminal device, or may be an apparatus that can support the terminal device in implementing the function, for example, a chip system. The apparatus may be mounted in the terminal device or used together with the terminal device. In this embodiment of this application, the chip system may include a chip, or may include a chip and another discrete component.

### 2. Access network device

There may be a plurality of access network devices, for example, a first access network device, a second access network device, and a third access network device. The access network device may also be referred to as an access network node, a RAN node, a RAN entity, an access node, or the like, is located on a network side of the foregoing communication system, and is configured to help the terminal device implement wireless access. The access network device is a device having a wireless transceiver function, or a chip or a chip system that may be disposed in the device. The access network device includes but is not limited to: a base station (base station), an evolved NodeB (evolved NodeB, eNodeB), an access point (access point, AP), a transmission reception point (transmission reception point, TRP or transmission point, TP), a next generation NodeB (next generation NodeB, gNB), a next generation base station in a sixth generation (6th generation, 6G) mobile communication system, a base station in a future mobile communication system, an access node in a Wi-Fi system, or the like. The access network device may be a macro base station, a micro base station, an indoor base station, a relay node, a donor node, or a radio controller in a centralized radio access network (centralized radio access network, CRAN) scenario. Alternatively, the access network device may be one antenna panel or a group of antenna panels (including a plurality of antenna panels) of a base station in 5G, or may be a network node that forms a gNB, a TRP, a TP, or a transmission measurement function (transmission measurement function, TMF), for example, a central unit (central unit, CU), a distributed unit (distributed unit, DU), a CU-control plane (control plane, CP), a CU-user plane (user plane, UP), a radio unit (radio unit, RU), or a roadside unit (roadside unit, RSU) having a base station function. Optionally, the access network device may alternatively be a server, a wearable device, a vehicle, a vehicle-mounted device, or the like. For example, an access network device in a V2X technology may be an RSU. All or some functions of a network device in this application may alternatively be implemented by using a software function running on hardware, or may be implemented by using an instantiated virtualization function on a platform (for example, a cloud platform). Alternatively, the access network device in this application may be a logical node, a logic module, or software that can implement all or some functions of the access network device.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as a network device in an access network RAN, or the CU may be classified as a network device in a CN. This is not limited herein.

In different systems, the CU (or the CU-CP and the CU-UP), the DU, or the RU may alternatively have different names, but a person skilled in the art may understand meanings thereof. For example, in an open-RAN (open-RAN, O-RAN) system, the CU may also be referred to as an O-CU (open-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

A form of the access network device is not limited in this embodiment of this application. An apparatus configured to implement a function of the access network device may be an access network device, or may be an apparatus that can support the access network device in implementing the function, for example, a chip system. The apparatus may be mounted in the access network device or used together with the access network device.

### 3. Core network device

The core network device is an apparatus that is deployed in the core network and that is configured to provide a service for the terminal device. In systems using different radio access technologies, core network devices having similar wireless communication functions may have different names. For example, when the method in embodiments of this application is applied to a 5G system, the core network device may be an access and mobility management function (access and mobility management function, AMF), a session management function (session management function, SMF), a user plane function (user plane function, UPF), or the like. The UPF processes user plane data. The AMF and the SMF process control plane signaling. When the method in embodiments of this application is applied to an LTE system, the core network device may be a mobility management entity (mobility management entity, MME). For ease of description only, in embodiments of this application, the foregoing apparatuses that can provide a service for the terminal device are collectively referred to as the core network device.

Further, FIG. 6 is a diagram of an architecture of a 5G system (system, S) applicable to the foregoing wireless communication system according to an embodiment of this application. As shown in FIG. 6, the 5GS includes a terminal device, an access network (access network, AN), and a core network (core network, CN).

The foregoing AN is configured to implement an access-related function, may provide a network access function for an authorized user in a specific area, and can determine transmission links with different quality based on a user level, a service requirement, and the like, to perform transmission of user data. The AN forwards a control signal and the user data between the terminal device and the CN. The AN may include an access network device, which may also be referred to as a RAN device.

The foregoing CN is mainly responsible for maintaining subscription data of a mobile network, and provides functions such as session management, mobility management, policy management, and security authentication for the terminal device. The CN mainly includes the following network elements: a UPF, an authentication server function (authentication server function, AUSF), an AMF, an SMF, a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), and an application function (application function, AF).

As shown in FIG. 6, the terminal device accesses a 5G network via the RAN device, and the terminal device communicates with the AMF through an N1 interface (N1 for short); the RAN device communicates with the AMF through an N2 interface (N2 for short); the RAN device communicates with the UPF through an N3 interface (N3 for short); and the SMF communicates with the UPF through an N4 interface (N4 for short), and the UPF accesses a data network (data network, DN) through an N6 interface (N6 for short). In addition, control plane functions such as the AUSF, the AMF, the SMF, the NSSF, the NEF, the NRF, the PCF, the UDM, the UDR, and the AF shown in FIG. 6 interact with each other through service-oriented interfaces. For example, a service-oriented interface exhibited by the AUSF is Nausf, a service-oriented interface exhibited by the AMF is Namf, a service-oriented interface exhibited by the SMF is Nsmf, a service-oriented interface exhibited by the NSSF is Nnssf, a service-oriented interface exhibited by the NEF is Nnef, a service-oriented interface exhibited by the NRF is Nnrf, a service-oriented interface exhibited by the PCF is Npcf, a service-oriented interface exhibited by the UDM is Nudm, a service-oriented interface exhibited by the UDR is Nudr, and a service-oriented interface exhibited by the AF is Naf.

The UPF is mainly responsible for user data processing (forwarding, receiving, charging, and the like). For example, the UPF may receive user data from the DN, and forward the user data to the terminal device via the access network device. Alternatively, the UPF may receive user data from the terminal device via the access network device, and forward the user data to the DN. The DN is an operator network that provides a data transmission service for a user, for example, an internet protocol (internet protocol, IP) multi-media subsystem (IP multi-media subsystem, IMS) or the internet (internet). The DN may be an external network of an operator, or may be a network controlled by the operator, and is configured to provide a service for the terminal device. A MEP is deployed in the DN, and exchanges user plane application layer data with the 5GS through the N6 interface, to provide a low-delay computing service. MEC may be deployed on an access network side together with a local UPF.

The AUSF is mainly configured to perform security authentication on the terminal device.

The AMF is mainly configured for mobility management in the mobile network, for example, user position update, registration of the user with a network, and user handover.

The SMF is mainly configured for session management in the mobile network, for example, session establishment, modification, and release. Specific functions are, for example, allocating an IP address to the user and selecting a UPF that provides a data packet forwarding function.

The PCF mainly supports providing a unified policy framework to control network behavior, and providing a policy rule for a control layer network function, and is also responsible for obtaining user subscription information related to policy decisions. The PCF may provide policies such as a QoS policy and a slice selection policy for the AMF and the SMF.

The NSSF is mainly configured to select a network slice for the terminal device.

The NEF is mainly configured to support exposure of capabilities and events.

The UDM is mainly configured to store user data, for example, subscription data and authentication/authorization data.

The UDR is mainly configured to store structured data. Stored content includes subscription data, policy data, externally exposed structured data, and application-related data.

The AF mainly supports interaction with the CN to provide a service, for example, affecting a data routing decision and a policy control function, or providing some third-party services for a network side.

It should be understood that FIG. 6 shows an example of some core network elements. The CN may further include another core network element, for example, a network data analysis function (network data analytics function, NWDAF), which has a computing capability, and implements, in a 5G network, a closed-loop automation procedure from data collection to data analysis, and then to feeding back of an analysis result to a network, to implement network automation.

In the 5GS shown in FIG. 6, computing service applications of network elements such as the terminal device and the RAN device and the MEC platform may be offloaded to available computing power resources such as another terminal device, another RAN device, and another MEC platform by using a wireless network. The network senses and orchestrates various types of computing power resources and allocates network transmission resources, to schedule a computing task to a most appropriate node, so as to improve service quality and user experience.

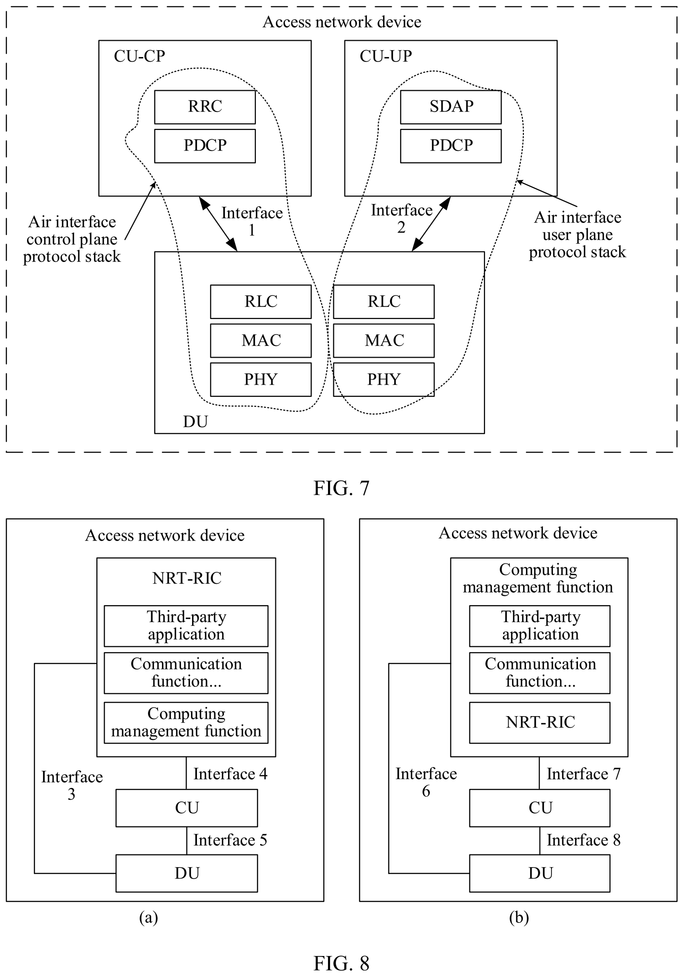

For the foregoing communication system, for example, FIG. 7 is a diagram of a structure of an access network device based on a CU-DU split architecture according to an embodiment of this application. As shown in FIG. 7, by dividing a protocol stack, the access network device includes a CU-CP, a CU-UP, and a DU. The CU-CP may communicate with the DU through an interface 1, and the CU-UP may communicate with the DU through an interface 2. Optionally, the access network device may be a gNB. In this case, the interface 1 may be an F1-C interface, and the interface 2 may be an F1-U interface.

The CU-CP includes an RRC layer and a packet data convergence protocol (packet data convergence protocol, PDCP) layer. The CU-UP includes a service data adaptation protocol (service data adaptation protocol, SDAP) layer and a PDCP layer. The DU includes a radio link control (radio link control, RLC) layer, a MAC layer, and a PHY layer. It can be learned that both the CU-CP and the CU-UP include a PDCP layer, the RRC layer is located above the PDCP layer in the CU-CP, and an RRC message is encapsulated into a PDCP data (data) packet data unit (packet data unit, PDU) after being processed by the PDCP layer. The PDCP data PDU may be separately sent by the CU-CP and the CU-UP.

A PDCP control (control) PDU is generated by the PDCP layer, is used to transfer robust header compression (robust header compression, ROHC) context information, and is usually sent by a PDCP layer protocol function of the CU-UP.

In this embodiment of this application, a computing management function may be integrated into a CU or the DU, or may be integrated into the CU-CP or the CU-UP obtained by further splitting the CU.

For another example, FIG. 8 is a diagram of a structure of an access network device based on an O-RAN architecture according to an embodiment of this application. As shown in FIG. 8, the access network device includes an intelligent controller (RAN intelligent controller, RIC). For example, the RIC may be an AI module, configured to implement an Al-related function. The RIC may include a near real-time RIC (near real-time RIC, NRT-RIC) and a non-real-time RIC (non-real-time RIC, Non-RT RIC).

The NRT-RIC is configured to perform model training and inference, for example, is configured to train an AI model and perform inference by using the AI model. The NRT-RIC may obtain information on a network side and/or a terminal device side from the access network device (for example, a CU, a CU-CP, a CU-UP, a DU, and/or an RU) and/or a terminal device. The information may be used as training data or inference data. Optionally, the NRT-RIC may deliver an inference result to the access network device and/or the terminal device. Optionally, the CU and the DU may exchange an inference result, and/or the DU and the RU may exchange an inference result. For example, the NRT-RIC delivers the inference result to the DU, and the DU sends the inference result to the RU.

The non-RT RIC is configured to perform model training and inference, for example, is configured to train the AI model and perform inference by using the AI model. The non-RT RIC may obtain the information on the network side and/or the terminal device side from the access network device (for example, the CU, the CU-CP, the CU-UP, the DU, and/or the RU) and/or the terminal device. The information may be used as the training data or the inference data, and the inference result may be delivered to the access network device and/or the terminal device. Optionally, the CU and the DU may exchange the inference result, and/or the DU and the RU may exchange the inference result. For example, the non-RT RIC delivers the inference result to the DU, and the DU sends the inference result to the RU.

The NRT-RIC and the non-RT RIC may alternatively be separately disposed as one network element. Optionally, the NRT-RIC and the non-RT RIC may alternatively be used as a part of another device. For example, the NRT-RIC is disposed in the access network device (for example, the CU or the DU), and the non-RT RIC is disposed in an OAM, a cloud server, a core network device, or another network device.

As shown in (a) in FIG. 8, the access network device includes the NRT-RIC, the CU, and the DU. The NRT-RIC is integrated with a computing management function, and runs a third-party computing application. The NRT-RIC communicates with the DU through an interface 3, the NRT-RIC communicates with the CU through an interface 4, and the CU communicates with the DU through an interface 5. Optionally, the access network device may be a gNB, the interface 3 and the interface 4 may be E2 interfaces, and the interface 5 may be an F1 interface.

As shown in (b) in FIG. 8, the access network device includes a computing management function, the CU, and the DU. The computing management function entity is integrated with the NRT-RIC, and runs a third-party computing application. The computing management function communicates with the DU through an interface 6, the computing management function communicates with the CU through an interface 7, and the CU communicates with the DU through an interface 8. Optionally, the access network device may be a gNB, the interface 6 and the interface 7 may be E2 interfaces, and the interface 8 may be an F1 interface.

In a possible implementation, the NRT-RIC in FIG. 8 may alternatively be replaced with the non-NRT RIC, and the computing management function and the third-party computing application may be integrated into the non-NRT RIC, or a non-NRT RIC function and the third-party computing application may be integrated into the computing management function entity. This is not limited.

In this embodiment of this application, a computing power network architecture is combined with an existing O-RAN architecture, and a small change is made to the architecture and an interface of an O-RAN, to facilitate implementation of the computing power network architecture. In addition, the third-party application is run on an open RIC module, which does not cause external security concerns. Computing task scheduling and optimization are more flexible and convenient.

It should be understood that, in embodiments of this application, names of nodes, modules, devices, or network elements in different scenarios, architectures, or systems, and names of communication interfaces between the nodes, modules, devices, or network elements are provided as examples, and a possibility of a name change in a future communication system, scenario, or architecture is not excluded.

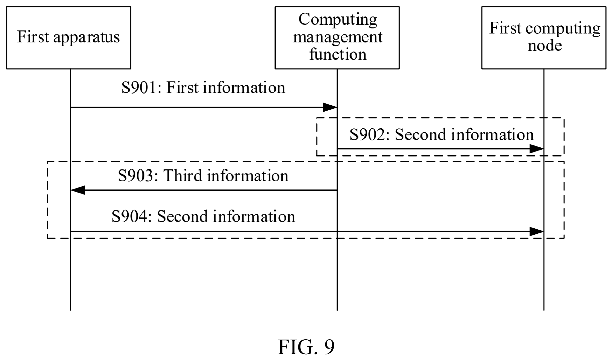

The following describes in detail the computing task scheduling method provided in embodiments of this application with reference to FIG. 9 to FIG. 12.

For example, FIG. 9 is a schematic flowchart of a computing task scheduling method according to an embodiment of this application. The computing task scheduling method is applicable to the system shown in any one of FIG. 4 to FIG. 6.

As shown in FIG. 9, the computing task scheduling method includes the following steps.

S901: A first apparatus sends first information to a computing management function, and correspondingly, the computing management function receives the first information from the first apparatus.

The first information indicates a requirement on a computing task of the first apparatus. The computing task may also be referred to as a computing service, and may be specifically a computing service application like AR, XR, or AI. The requirement on the computing task is used to represent an attribute or a requirement on the computing task, and may include computing QoS requirement parameter information and/or communication QoS requirement parameter information.

In this embodiment of this application, the requirement on the computing task may include at least one of the following: a type of the computing task, an input data rate, an output data rate, a computing delay, computing power, computing precision, or computing energy consumption. The type of the computing task, the computing delay, the computing power, the computing precision, and the computing energy consumption belong to the computing QoS requirement parameter information, and the input data rate and the output data rate belong to the communication QoS requirement parameter information.
- The type of the computing task may be a computing power type of physical hardware needed for executing the computing task, for example, a computing power type like a central processing unit (central processing unit, CPU), a graphics processing unit (graph processing unit, GPU), a neural network processing unit (neural network processing unit, NPU), or a tensor processing unit (tensor processing unit, TPU). Alternatively, the type of the computing task may be a service type corresponding to the computing task, for example, an image/video recognition type, a compression type, a graphics rendering type, an AI training type, an AI inference type, a sensing processing type, a high-performance computing type, or a big data offline analysis type.
- An input/output data rate requirement may indicate (or referred to as reflecting, or referred to as representing) an input/output data amount requirement, to represent a communication QoS requirement on the computing task. The requirement on the computing task includes the communication QoS requirement on the computing task. The communication QoS requirement on the computing task may further include a communication QoS parameter defined by 5G NR, for example, a 5G QoS parameter like an uplink/downlink packet delay budget (uplink/downlink packet delay budget, UL/DL PDB), a guaranteed bit rate (guaranteed bit rate, GBR), or a maximum data burst volume (maximum data burst volume, MDBV), and may be represented by a 5G QoS identifier (5G QoS identifier, 5QI).
- A computing power requirement may indicate (or referred to as reflecting, or referred to as representing) a requirement on a computing capability for executing the computing task, and may be represented as a requirement on a computing capability of a processor. The computing capability of the processor may include operations per second (second, s) (operations per second, OPS) or floating-point operations per second (floating-point operations per second, FLOPS) that may be performed by the processor, or a model, a memory capacity, an I/O speed, a dominant frequency, or the like of the processor. For example, the computing power requirement includes a quantity of hertz (hertz, Hz) or giga hertz (giga hertz, GHz) that needs to be reached by the dominant frequency, a quantity of gigabits per second (Gbits/s) that needs to be reached by input/output operations per second (input/output operations per second, IOPS), and a quantity of bytes of a memory capacity that is needed.
- A computing delay requirement may indicate (or referred to as reflecting, or referred to as representing) a requirement on duration of completing the computing task, for example, a time length within which the computing task needs to be completed.
- A computing energy consumption requirement may also indicate (or referred to as reflecting, or referred to as representing) a computing power consumption requirement, and may be a requirement on power or energy consumed by a device that executes the computing task. For example, the computing task may be performed by a terminal device, the computing power consumption requirement may include a requirement on computing power consumption of the terminal device, the requirement on the computing power consumption of the terminal device may be a requirement on average computing power consumption of the terminal device for executing a task in a period of time, and duration for computing the average computing power consumption may be predefined or preconfigured. Alternatively, the computing power consumption requirement may be a requirement on computing power consumption of the terminal device for completing one time of processing or in short time (for example, processing one video frame or one subtask). The computing power consumption may alternatively be converted into a corresponding computing energy consumption indicator, and a unit may be a convertible unit like watt or joule.
- A computing precision requirement may indicate (or referred to as reflecting, or referred to as representing) a requirement on an error between a computing result and a real result, for example, the error does not exceed 5%. Alternatively, the computing precision requirement may be an accuracy requirement on an inference/training result obtained by performing inference or training by using an AI model/algorithm.

Optionally, the requirement on the computing task may further include other requirement information that facilitates computing task scheduling, for example, delay jitter, XR quality index (XR quality index, XQI), or quality of experience (quality of experience, QoE). This is not limited in this embodiment of this application.

In this embodiment of this application, the computing task may include at least one subtask. In other words, one computing task may be divided into one or more subtasks. The computing task may be divided into subtasks according to a preset rule. For example, one processing process/step/process in the computing task is used as one subtask. In addition, each subtask in the computing task has a subtask associated with the subtask, to represent an execution sequence, an association requirement, and the like between the subtasks. Correspondingly, the requirement on the computing task is also allocated to each subtask. In other words, the requirement on the computing task includes requirement information of each subtask in the computing task. The requirement information indicates a computing requirement that needs to be met to complete the subtask, and the requirement information may include one or more of the computing delay requirement, the computing power requirement, the computing precision requirement, the computing energy consumption requirement, or a priority of the subtask. The priority of the subtask may be used to represent an execution ranking of the subtask.

Optionally, the computing task may be divided by the computing management function or the first apparatus.

Further, the computing task may be divided into the subtasks by the computing management function. In this case, the first information indicates an overall requirement on the computing task.

Further, the computing task may be divided into the subtasks by the first apparatus. In this case, the first information may further indicate an association relationship between each subtask in the computing task and a previous subtask and/or a subsequent subtask. The association relationship may include at least one of the following: a data transmission direction, a data transmission rate requirement, a data throughput requirement, a data transmission delay requirement, a data transmission bandwidth requirement, or a reliability requirement. In other words, in this case, the first information includes the requirement information of each subtask in the computing task and association information of each subtask.

It should be understood that, regardless of whether the computing management function or the first apparatus performs subtask division, the computing management function and the first apparatus may perform division according to a same rule, so that the computing management function and the first apparatus may previously align use of the rule, to better implement subtask division processing. Optionally, the division rule may be predefined or preconfigured, or may be negotiated by both parties. This is not limited in this embodiment of this application.

Optionally, there is an association relationship between the computing task and the subtask corresponding to the computing task. Specifically, for a subtask n, n is an integer greater than 1 and less than N, N is a quantity of subtasks obtained by dividing the computing task, N is an integer greater than 1, and the subtask n has a previous subtask and a subsequent subtask. In this case, output data of the previous subtask corresponding to the subtask n is used as input data of the subtask n, and output data of the subtask n is used as input data of the subsequent subtask corresponding to the subtask n. In this case, the subtask n may be referred to as an intermediate subtask.

For a subtask n, n is equal to 1, and the subtask n has a subsequent subtask and does not have a previous subtask. In this case, input data of the subtask n may be obtained locally or from another computing node by a computing node that executes the subtask n, and output data of the subtask n is used as input data of the subsequent subtask corresponding to the subtask n. In this case, the subtask n may be referred to as a start subtask.

For a subtask n, n is equal to N, and the subtask n has a previous subtask and does not have a subsequent subtask. In this case, output data of the previous subtask corresponding to the subtask n is used as input data of the subtask n, and output data of the subtask n is an output result of the entire computing task. In this case, the subtask n may be referred to as an end subtask.

A first subtask in the computing task is used as an example. The first subtask has a previous subtask and a subsequent subtask. In this case, input data of the first subtask is output data of the previous subtask corresponding to the first subtask, and output data of the first subtask is input data of the subsequent subtask corresponding to the first subtask. In other words, an output obtained by completing execution of the previous subtask corresponding to the first subtask is used as an input of the first subtask, and an output obtained by completing execution of the first subtask is used as an input of the subsequent subtask corresponding to the first subtask.

It should be understood that, the first subtask is a subsequent subtask corresponding to the previous subtask corresponding to the first subtask, and the first subtask is a previous subtask corresponding to the subsequent subtask corresponding to the first subtask. In addition, one subtask may correspond to a plurality of previous subtasks and a plurality of subsequent subtasks.

In a possible design solution, the computing task is represented by using a directed acyclic graph (directed acyclic graph, DAG), each vertex in the DAG includes requirement information of one subtask in the computing task, and each edge in the DAG includes association information between one subtask in the computing task and a corresponding previous subtask and/or subsequent subtask. In other words, each vertex (vertex) in the DAG represents one subtask, the subtask has corresponding requirement information, and each edge (edge) represents an association relationship between one subtask and a previous or subsequent subtask. It may be understood that if there is a connecting edge between two vertices cᵢ and cⱼ, it indicates that a subtask corresponding to the vertex cᵢ and a subtask corresponding to the vertex cⱼ have corresponding association information. The association information indicates a transmission requirement between the subtask and the corresponding previous subtask and/or subsequent subtask. It should be understood that the vertex in the DAG may also be referred to as a node.

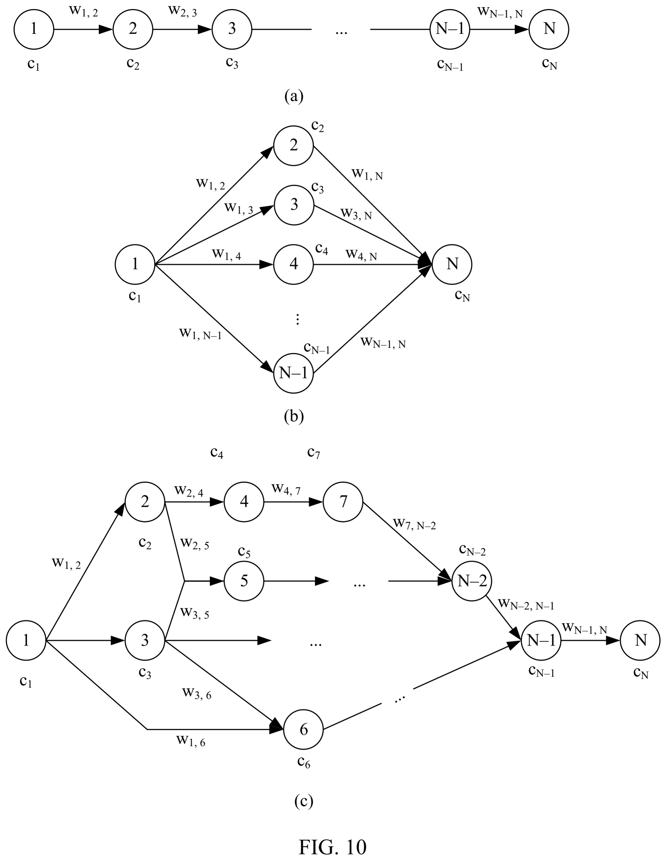

FIG. 10 is a diagram of a structure of three DAG-modeling-based computing tasks by using an example in which the computing task includes N subtasks (c₁ to c_{N}). A subtask 1 and a subtask N are respectively a start subtask and an end subtask, and wₙ is output data of a subtask. As shown in (a) in FIG. 10, there is a serial dependency relationship between the N subtasks. To be specific, after execution of the subtask 1 (c₁) is completed, a subtask 2 (c₂) needs to obtain output data w₁ of the subtask 1 as input data before being executed; after execution of the subtask 2 is completed, a subtask 3 (c₃) needs to obtain output data w₂ of the subtask 2 as input data before being executed; and so on. Execution of the entire computing task is completed only after execution of a subtask N-1 (c_{N-1}) is completed and the subtask N (c_{N}) obtains output data w_{N-1} of the subtask N-1 as input data for execution and output. In this case, each subtask in the subtask 2 to the subtask N-1 corresponds to one previous subtask and one subsequent subtask, the subtask 1 corresponds to one subsequent subtask (namely, the subtask 2), and the subtask N corresponds to one previous subtask (namely, the subtask N-1).

As shown in (b) in FIG. 10, there is a parallel execution relationship between a plurality of subtasks in the N subtasks. To be specific, other than the subtask 1 (c₁) and the subtask N (c_{N}), the subtask 2 (c₂) to the subtask N-1 (c_{N-1}) may be executed in parallel and are independent of each other, input data of the subtask 2 to the subtask N-1 is all output data w₁ of the subtask 1, and output data (w₂ to w_{N-1}) of the subtask 2 to the subtask N-1 is all input data of the subtask N. After execution of the subtask N is completed, the execution of the entire computing task is completed. In this case, the subtask 1 corresponds to N-2 subsequent subtasks, the subtask N corresponds to N-2 previous subtasks, a previous subtask corresponding to any one of the subtasks 2 to the subtask N-1 is the subtask 1, and a subsequent subtask is the subtask N.

As shown in (c) in FIG. 10, there may be a complex dependency relationship between the N subtasks. For example, input data of a subtask 5 is output data of a subtask 2 and a subtask 3.

Therefore, the first apparatus may represent an association relationship or a topology relationship between the subtasks in the computing task in a form of the DAG, configure corresponding requirement information for each vertex (subtask) in the DAG, configure corresponding association information for each edge (association relationship), and send the requirement information and the association information to the computing management function by using the first information.

In a computing task scheduling process, the computing task is split to obtain a subtask architecture shown in any one of (a) to (c) in FIG. 10. For each subtask, the corresponding association information used to represent the execution ranking of the subtask and a transmission requirement between the subtask and an associated subtask, and the requirement information used to represent a requirement that needs to be met to complete each subtask may be configured.

For any subtask cₙ in the computing task, requirement parameters configured in requirement information of the subtask cₙ may be uniformly configured, for example, may be represented as subtask cₙ {requirement information: computing power requirement, computing precision requirement, computing energy consumption requirement, priority of subtask cₙ}. Association parameters configured in association information of the subtask cₙ may also be uniformly configured, for example, may be represented as subtask cₙ {association information: associated previous subtask, data transmission rate requirement between this subtask and the associated previous subtask, data transmission bandwidth requirement between this subtask and the associated previous subtask, data throughput requirement between this subtask and the associated previous subtask, data transmission delay requirement between this subtask and the associated previous subtask, associated subsequent subtask, data transmission rate requirement between this subtask and the associated subsequent subtask, data transmission bandwidth requirement between this subtask and the associated subsequent subtask, data throughput requirement between this subtask and the associated subsequent subtask, data transmission delay requirement between this subtask and the associated subsequent subtask}.

Alternatively, requirement information and association information of a same subtask may be uniformly configured, for example, represented as subtask cₙ: {requirement information: computing power requirement, computing precision requirement, computing energy consumption requirement, priority of subtask cₙ; association information: associated previous subtask, data transmission rate requirement between this subtask and the associated previous subtask, data transmission bandwidth requirement between this subtask and the associated previous subtask, data throughput requirement between this subtask and the associated previous subtask, data transmission delay requirement between this subtask and the associated previous subtask, associated subsequent subtask, data transmission rate requirement between this subtask and the associated subsequent subtask, data transmission bandwidth requirement between this subtask and the associated subsequent subtask, data throughput requirement between this subtask and the associated subsequent subtask, data transmission delay requirement between this subtask and the associated subsequent subtask}.

Alternatively, same requirement parameters or association parameters of different subtasks may be uniformly indicated. For example, computing power requirements on the N subtasks may be represented as {computing power requirement: computing power requirement 1, computing power requirement 2, ..., computing power requirement N}.

In a possible design solution, the requirement information of each subtask in the computing task and/or the association information of each subtask may be configured in a form of a table. The requirement information of the subtask and the association information of the subtask may be configured in different tables, or may be configured in a same table. This is not limited.

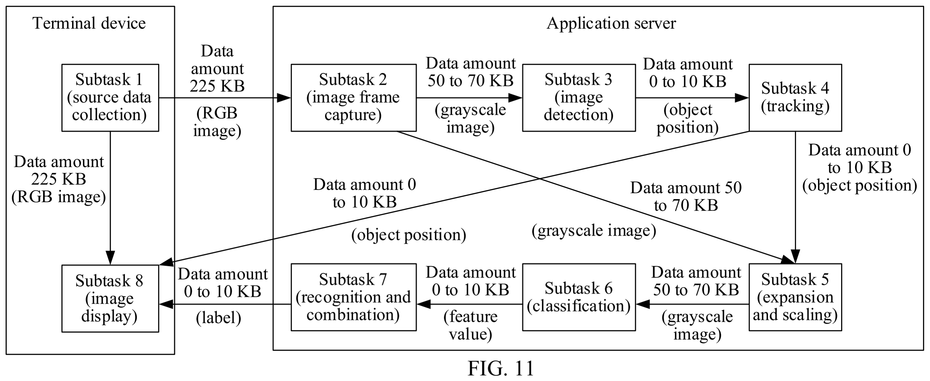

For example, as shown in FIG. 11, an example in which the computing task is an AR rendering task is used. The AR rendering task includes eight processing processes: source data collection, image frame capture, image detection, tracking, scaling and expansion, classification, recognition and combination, and image display. The first apparatus uses the eight processing processes respectively as eight subtasks (a subtask 1 to a subtask 8), that is, N=8. Configuration of requirement information and association information of each subtask is shown in the following Table 1. The requirement information of each subtask includes a computing power requirement (CPU cycle). The association information of each subtask includes an associated previous subtask, an associated subsequent subtask, an input data amount requirement, and an output data amount requirement. A unit of an input/output data amount is kilobyte (kilobyte, KB).

**Table 1**

| AR rendering task QoS for 320×240 RGB/frame | Computing power requirement (CPU cycle) | Associated previous subtask | Input data amount requirement (KB) | Associated subsequent subtask | Output data amount requirement (KB) |
|---|---|---|---|---|---|
| Subtask 1 (source data collection) | 0 | / | 0 | 2 | 225 |
| Subtask 2 (image frame capture) | 0 | 1 | 225 | 3 and 5 | 275 to 295 |
| Subtask 3 (image detection) | 60 to 80 M | 2 | 50 to 70 | 4 | 0 to 10 |
| Subtask 4 (tracking) | 0 | 3 | 0 to 10 | 5 and 8 | 0 to 20 |
| Subtask 5 (scaling and expansion) | 0 | 2 and 4 | 225 to 235 | 6 | 50 to 70 |
| Subtask 6 (classification) | 100 to 200 M | 5 | 50 to 70 | 7 | 0 to 10 |
| Subtask 7 (recognition and combination) | 100 to 200 M | 6 | 0 to 10 | 8 | 0 to 10 |
| Subtask 8 (display) | 0 | 4 and 7 | 0 to 20 | / | / |

Based on the requirement information and the association information of each subtask shown in Table 1, in the first information, transmission of each subtask in the AR rendering task may be performed in the following form, for example, subtask n {computing power requirement parameter, input data amount requirement parameter, output data amount requirement parameter, associated previous subtask, associated subsequent subtask}. Alternatively, transmission of same parameters of different subtasks may be performed in a uniform manner, for example, in a form of {computing power requirement parameter 1, computing power requirement parameter 2, computing power requirement parameter 3, ..., computing power requirement parameter 8}, which respectively correspond to computing power requirements on the eight subtasks, or performed in a form of another list (list). This is not specifically limited in this embodiment of this application.

In a possible case, for example, the first apparatus is a terminal device, and the computing management function is integrated into an access network device. The first information may be borne in the computing service request in FIG. 3, and the computing service request may be borne in RRC signaling, MAC-CE signaling, or PHY signaling for sending.

Further, in a CU-DU split access network device architecture, provided that the computing management function is integrated into a DU, a CU may transfer, to the DU through an interface (for example, an F1 interface), the first information received from the first apparatus, to obtain the first information.

In another possible case, for example, the first apparatus is a core network device or an application server in a DN, and the computing management function is integrated into an access network device. The first information may be transmitted through an interface between the core network device and the access network device.

It should be understood that, in this embodiment of this application, in different scenarios, the first information may be borne in different messages, and the first information may be borne in an existing implementation message, or may be borne in another defined new message. This is not limited.

S902: The computing management function sends second information to a first computing node in response to the first information. Correspondingly, the first computing node receives the second information from the computing management function.

The second information indicates one or more subtasks in the at least one subtask scheduled to the first computing node.

After receiving the first information, provided that the computing management function determines that the computing task is not divided, the computing management function may divide the computing task into the subtasks according to a preset rule, to obtain the requirement information and the association information of each subtask in the computing task. For a specific implementation process, refer to the related descriptions in S901. Details are not described herein again.

Further, after obtaining the requirement information and the association information of each subtask in the computing task, the computing management function may sense a computing power status of each computing node in a network system, a status of a network between the computing node and the first apparatus, a status of a network between computing nodes, and the like, to determine one or more computing nodes and second information corresponding to each of the computing nodes. The one or more computing nodes are computing nodes that are scheduled by the computing management function and that are configured to complete the computing task, and the one or more computing nodes include the first computing node. In other words, the computing management function matches the requirement information and the association information of each subtask in the computing task with computing power information and a network status of the computing node, and selects a computing node that best matches the computing task, to reduce an end-to-end delay of completing the computing task. The network status may include channel quality, a transmission bit rate, a transmission delay, an available bandwidth size, congestion status information, or the like. For example, when the first apparatus is a first terminal device, and computing nodes in a network include the first terminal device, another terminal device (for example, a second terminal device), an application server, a core network device, and the like, the computing management function may sense a network status between the first terminal device and each computing node.

In this embodiment of this application, the second information is computing task scheduling information. After determining a computing node that executes the computing task, the computing management function allocates one or more subtasks to be executed to each computing node, and sends corresponding scheduling information to each computing node, so that each computing node can execute the subtask based on a requirement on the subtask.

For the first computing node, if the one or more subtasks scheduled to the first computing node include a second subtask, second information corresponding to the first computing node may include requirement information of the second subtask and association information of the second subtask.

The requirement information of the second subtask indicates a computing requirement that needs to be met to complete the second subtask. The requirement information of the second subtask may include at least one of the following: a computing delay requirement, a computing power requirement, a computing precision requirement, a computing energy consumption requirement, or a priority of the second subtask.

The association information of the second subtask indicates a transmission requirement between the second subtask and a previous subtask and/or a subsequent subtask corresponding to the second subtask, and the association information of the second subtask may include at least one of the following: a data transmission direction between the second subtask and the previous subtask and/or the subsequent subtask corresponding to the second subtask, a data transmission rate requirement between the second subtask and the previous subtask and/or the subsequent subtask corresponding to the second subtask, a data throughput requirement between the second subtask and the previous subtask and/or the subsequent subtask corresponding to the second subtask, a data transmission delay requirement between the second subtask and the previous subtask and/or the subsequent subtask corresponding to the second subtask, a data transmission bandwidth requirement between the second subtask and the previous subtask and/or the subsequent subtask corresponding to the second subtask, position information of a computing node that executes the previous subtask corresponding to the second subtask, or position information of a computing node that executes the subsequent subtask corresponding to the second subtask. It should be understood that, for the plurality of subtasks allocated to the first computing node, each subtask corresponds to one piece of requirement information and one piece of association information.

Optionally, the computing management function may further formulate a computing and communication resource allocation policy for the selected computing node. The computing management function may pre-allocate a specific computing power resource to the selected computing node based on a computing and communication requirement on each subtask, and pre-allocate a corresponding transmission resource to data transmission of the subtask. In other words, the second information may further include resource information, and the resource information indicates a computing power resource and a transmission resource that are allocated to the computing node.

Continuing with the foregoing example of the AR rendering task, the computing management function schedules, based on a computing requirement on the subtask in the AR rendering task and a transmission requirement between the subtask and a previous subtask and/or a subsequent subtask, subtasks 1 to 7 with a large computing amount and a small transmission data amount to the application server for computing, and schedules the subtask 1 and the subtask 8 with a small computing amount and a large transmission data amount to the terminal device for local execution. That is, two computing nodes are selected, including the terminal device and the application server, to reduce an end-to-end delay of completing the computing task. As shown in Table 1, the subtask 1 is used as an example. Second information corresponding to the terminal device includes requirement information of the subtask 1 and association information of the subtask 1. The requirement information of the subtask 1 includes a computing power requirement (for example, 0), and the association information of the subtask 1 includes that the subsequent subtask of the subtask 1 is the subtask 2, and includes an address of an application server that executes the subtask 2, and an output data amount requirement (reaching 225 KB) between the subtask 1 and the subtask 2.

Therefore, after selecting the computing node, the computing management function sends corresponding second information to each selected computing node. Optionally, the second information may be borne in the computing service response shown in FIG. 3 for sending. It should be understood that, in this embodiment of this application, the second information may alternatively be borne in an existing implementation message, or may be borne in another defined new message. This is not limited.

Further, each computing node may execute the allocated subtask based on the corresponding second information, to complete the computing task.

In a possible design solution, the one or more computing nodes may further include a second computing node. In this case, the first apparatus may send first data to the second computing node. Correspondingly, the second computing node receives the first data from the first apparatus. The first data is used to complete a subtask scheduled to the second computing node. When the first apparatus is not the selected computing node configured to complete the computing task, provided that the second computing node is a computing node that executes the start subtask, the first data may be used as input data of the start subtask, and the first apparatus provides the first data. When the first apparatus is the selected computing node configured to complete the computing task, the first data may be output data of the subtask executed by the first apparatus, and is used as input data of the subtask executed by the second computing node.

In the foregoing example, a process in which the terminal device and the application server complete the AR rendering task is as follows.

After completing execution of the subtask 1 (source data collection) based on a requirement, the terminal device sends the output data (an RGB image) of the subtask 1 to the application server as the input data of the subtask 2 (image frame capture). After completing execution of the subtask 2, the application server uses the output data (a grayscale image) of the subtask 2 as input data of the subtask 3 (image detection) and the subtask 5 (expansion and scaling); after completing execution of the subtask 3, uses the output data (an object position) of the subtask 3 as input data of the subtask 4 (tracking); and after completing execution of the subtask 4, uses output data (an object position) of the subtask 4 as input data of the subtask 5 and the subtask 8 (image display), and sends the output data of the subtask 4 to the terminal device. In this case, when executing the subtask 5, the application server uses the output data of the subtask 2 and the output data of the subtask 4 jointly as the input data of the subtask 5; after completing execution of the subtask 5, uses output data (a grayscale image) of the subtask 5 as input data of the subtask 6 (classification); after completing execution of the subtask 6, uses output data (a feature value) of the subtask 6 as input data of the subtask 7 (recognition and combination); and after completing execution of the subtask 7, sends output data (a label) of the subtask 7 to the terminal device as an input of the subtask 8. In this case, the application server completes the scheduled subtasks. Further, the terminal device uses the output data of the subtask 4, the output data of the subtask 7, and the output data of the subtask 1 as the input of the subtask 8. After execution of the subtask 8 is completed, image display may be performed on the terminal device. In this case, the entire AR rendering task is completed.

In a possible design solution, S902 may be replaced with the following S903 and S904.

S903: The computing management function sends third information to the first apparatus in response to the first information. Correspondingly, the first apparatus receives the third information from the computing management function.

The third information includes an identifier of the first computing node and the second information corresponding to the first computing node. It should be understood that the first computing node is any one of the one or more computing nodes that are scheduled/selected, and the third information may include an identifier of the one or more computing nodes that are scheduled/selected and the second information corresponding to each of the computing nodes.

S904: The first apparatus sends the second information to the first computing node. Correspondingly, the first computing node receives the second information from the first apparatus.

In other words, after selecting the computing node, the computing management function notifies, by using the third information, the first apparatus of all the selected computing nodes and scheduling information (the second information) of each computing node, and the first apparatus sends the scheduling information to the selected computing node based on the identifier of each computing node.

For example, the first apparatus is the terminal device that executes the subtask 1 and the subtask 2 in the foregoing example. In this case, the first computing node may be the application server that executes the subtasks 2 to 7. The terminal device may determine, based on the received third information, a subtask executed by the terminal device and a subtask requirement, and a subtask executed by the application server and a subtask requirement, and send second information corresponding to the application server to the application server. For example, an APP of the terminal device notifies the application server by including the second information corresponding to the application server in metadata (metadata). The metadata is descriptions and a context of data, and is used to organize, search for, and understand the data. A metadata element may include a title and descriptions, a label and a category, who creates the data, when the data is created, who last modifies the data, when the data is modified, who can access or update the data, or the like.

Therefore, the terminal device and the application server separately complete allocated subtasks based on the corresponding second information. For a specific implementation process, refer to related descriptions in S902. Details are not described herein again.

According to the computing task scheduling method shown in FIG. 9, a complex computing task like AR, VR, or machine vision is divided into a plurality of computing subtasks. The computing management function may determine computing and communication requirements on the subtasks in the computing task based on the received first information, and schedule, based on the computing and communication requirements on the subtasks, the subtasks to one or more appropriate computing nodes for execution, so that computing power resource utilization and transmission resource utilization can be improved, and service experience of a service can also be ensured.

With reference to the 5GS shown in FIG. 6, the following separately uses an example in which a computing management function is integrated into an access network device that is based on a CU-DU split architecture and the access network device that is based on the O-RAN architecture shown in FIG. 8, and a first apparatus is a terminal device, and an example in which two selected computing nodes include the first apparatus and an application server deployed in a DN, to describe a process of sending first information and second information (scheduling information).

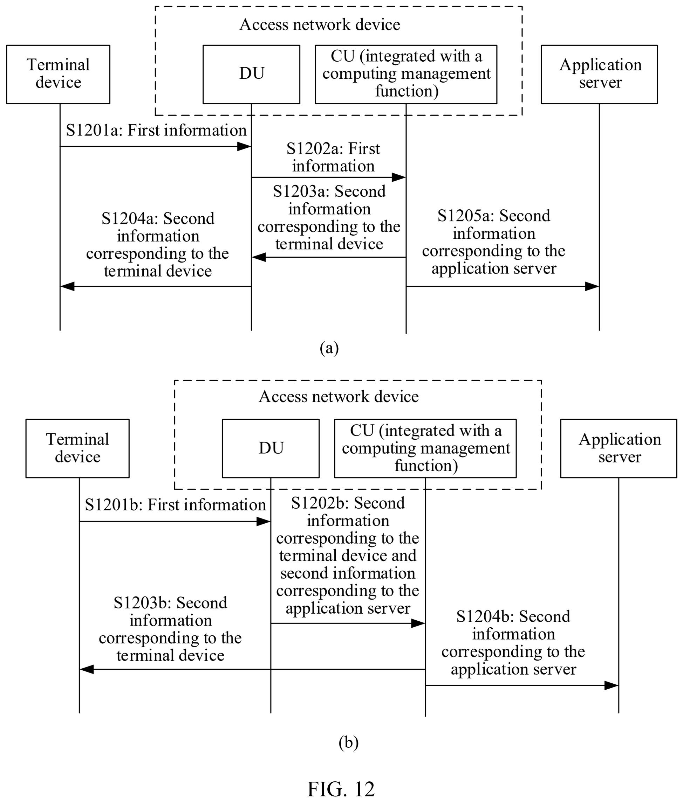

In a scenario in which the computing management function is integrated into the access network device that is based on the CU-DU split architecture:
In a possible case, the computing management function is integrated into a CU, as shown in (a) in FIG. 12.

S1201a: The terminal device sends the first information to a DU. Correspondingly, the DU receives the first information from the terminal device.

Optionally, the first information may be borne in RRC signaling, MAC-CE signaling, or PHY signaling for sending. This is not limited. For related descriptions of the first information, refer to the related descriptions in S901. Details are not described herein again.

S1202a: The DU sends the first information to the CU. Correspondingly, the CU receives the first information from the DU.

For a decision and scheduling process in which the CU selects a computing node and determines second information (scheduling information) corresponding to each of the computing nodes after obtaining the first information, refer to related descriptions in S902. Details are not described herein again.

S1203a: The CU sends second information corresponding to the terminal device to the DU. Correspondingly, the DU receives the second information corresponding to the terminal device from the CU.

S1204a: The DU sends the second information corresponding to the terminal device to the terminal device. Correspondingly, the terminal device receives the second information corresponding to the terminal device from the DU.

Optionally, the second information (scheduling information) corresponding to the terminal device may be borne in DCI or the MAC-CE signaling for sending.

S1205a: The CU sends second information corresponding to the application server to the application server. Correspondingly, the application server receives the second information corresponding to the application server from the CU.

For example, the CU may send, to a UPF, the second information that corresponds to the application server and that is carried in a user plane part of general packet radio service (general packet radio service, GPRS) tunneling protocol (user plane part of GPRS tunneling protocol, GTP-U) packet header of one or more pieces of uplink data, so that after the UPF detects the GTP-U packet header of the uplink data, the second information corresponding to the application server is obtained through parsing, and then the UPF sends the second information corresponding to the application server to the application server in an application programming interface (application programming interface, API) manner through a NEF or a local-NEF. Alternatively, the UPF adds the second information corresponding to the application server by modifying a packet header of a to-be-transmitted data packet, and sends the second information corresponding to the application server to the application server. For example, the UPF adds the second information corresponding to the application server to a packet header of a data packet encapsulated by using a user datagram protocol (user datagram protocol, UDP), a quick UDP internet connections (quick UDP internet connections, QUIC) protocol, or a real-time transport protocol (real-time transport protocol, RTP).

It should be understood that a sequence of performing S1203a and S1205a is not limited in this embodiment of this application. S1203a and S1205a may be simultaneously performed, or may not be simultaneously performed. This is not limited.

In a possible scenario, as shown in FIG. 7, the CU is further split into a CU-CP and a CU-UP. Provided that the computing management function is integrated into the CU-CP, the CU-CP needs to further send the second information corresponding to the terminal device to the CU-UP. In this case, the CU-UP sends the second information corresponding to the terminal device to the terminal device, and the second information corresponding to the terminal device may be carried in a PDCP control PDU for sending. In addition, the CU-UP sends the uplink data to the UPF, where the GTP-U packet header of the uplink data carries the second information corresponding to the application server, to send the second information corresponding to the application server to the application server. Alternatively, the DU sends the second information corresponding to the application server to the CU-UP, and the CU-UP includes the second information corresponding to the application server in the GTP-U packet header of the uplink data, and sends the GTP-U packet header of the uplink data to the application server.

Further, the terminal device and the application server may execute allocated subtasks based on the corresponding second information, to complete a computing task.

In another possible case, the computing management function is integrated into a DU, as shown in (b) in FIG. 12.

S1201b: The terminal device sends the first information to the DU. Correspondingly, the DU receives the first information from the terminal device.

S1202b: The DU sends second information corresponding to the terminal device and second information corresponding to the application server to a CU. Correspondingly, the CU receives the second information corresponding to the terminal device and the second information corresponding to the application server from the DU.

S1203b: The CU sends the second information corresponding to the terminal device to the terminal device. Correspondingly, the terminal device receives the second information corresponding to the terminal device from the CU.

The second information corresponding to the terminal device may be carried in an RRC message or a PDCP control PDU for sending.

S 1204b: The CU sends the second information corresponding to the application server to the application server. Correspondingly, the application server receives the second information corresponding to the application server from the CU.

For a specific implementation process of S1204b, refer to the related descriptions in S 1205a. Details are not described herein again.

It should be understood that a sequence of performing S1203b and S1204b is also not limited in this embodiment of this application. S1203b and S1204b may be simultaneously performed, or may not be simultaneously performed. This is not limited. For related descriptions of the first information and the second information, refer to the related descriptions in S901 and S902. Details are not described herein again.

In a possible scenario, as shown in FIG. 7, the computing management function is integrated into the DU, and the CU is further split into a CU-CP and a CU-UP. In this case, the DU may send the second information corresponding to the terminal device and the second information corresponding to the application server to the CU-UP, or the DU may send the second information corresponding to the terminal device and the second information corresponding to the application server to the CU-CP, and the CU-CP sends the second information corresponding to the terminal device and the second information corresponding to the application server to the CU-UP, so that the CU-UP includes the second information corresponding to the terminal device in the PDCP control PDU for sending, includes the second information corresponding to the application server in a GTP-U packet header of uplink data, and sends the GTP-U packet header of the uplink data to the application server.

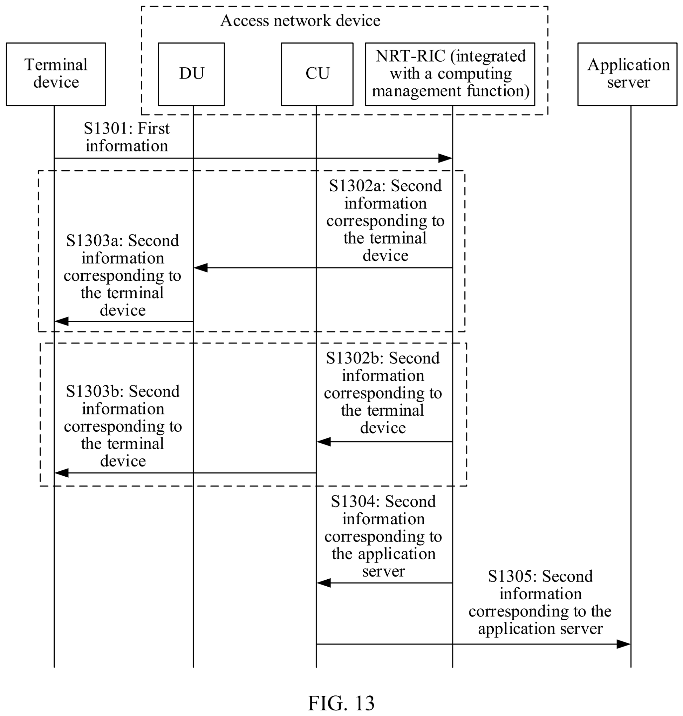

In a scenario in which the computing management function is integrated into the access network device based on the O-RAN architecture shown in FIG. 8:
In a possible case, the computing management function is integrated into an NRT-RIC of the access network device, as shown in FIG. 13.

S1301: A terminal device sends first information to the NRT-RIC. Correspondingly, the NRT-RIC receives the first information from the terminal device.

In a possible implementation, the first information may be sent by a CU or a DU to the NRT-RIC.

In another possible implementation solution, the first information may be sent by a DU to a CU, and then sent by the CU to the NRT-RIC.

S1302a: The NRT-RIC sends second information corresponding to the terminal device to the DU. Correspondingly, the DU receives the second information corresponding to the terminal device from the NRT-RIC.

S1303a: The DU sends the second information corresponding to the terminal device to the terminal device. Correspondingly, the terminal device receives the second information corresponding to the terminal device from the DU.

In this case, the second information corresponding to the terminal device may be borne in DCI or a MAC CE for sending.

Alternatively, S1302a and S1303a may be replaced with the following S1302b and S1303b.

S1302b: The NRT-RIC sends the second information corresponding to the terminal device to the CU. Correspondingly, the CU receives the second information corresponding to the terminal device from the NRT-RIC.

S1303b: The CU sends the second information corresponding to the terminal device to the terminal device. Correspondingly, the terminal device receives the second information corresponding to the terminal device from the CU.

In this case, the second information corresponding to the terminal device may be borne in an RRC message or a PDCP control PDU for sending.

In a possible implementation, the second information corresponding to the terminal device may be sent by the CU to the DU, and then sent by the DU to the terminal device.

In a possible case, provided that the CU is further divided into a CU-CP and a CU-UP, the NRT-RIC may send the second information corresponding to the terminal device to the CU-CP or the CU-UP, and then the CU-CP or the CU-UP sends the second information corresponding to the terminal device to the terminal device.

S1304: The NRT-RIC sends second information corresponding to an application server to the CU. Correspondingly, the CU receives the second information corresponding to the application server from the NRT-RIC.

S1305: The CU sends the second information corresponding to the application server to the application server. Correspondingly, the application server receives the second information corresponding to the application server from the CU.

In a scenario in which the CU is further divided into the CU-CP and the CU-UP, the NRT-RIC may send the second information corresponding to the application server to the CU-UP, and then the CU-UP sends the second information corresponding to the application server to the application server.

For example, the CU or the CU-UP may include the second information corresponding to the application server in a GTP-U packet header of one or more pieces of uplink data, and send the GTP-U packet header of the uplink data to a UPF. The UPF detects the GTP-U packet header of the uplink data, to obtain the second information corresponding to the application server, so that the UPF notifies the application server of the second information corresponding to the application server in an API manner through a NEF or a local-NEF.

It should be understood that a sequence of performing S1302a or S1302b and S1304 is not limited in this embodiment of this application. For related descriptions of the first information and the second information, refer to the related descriptions in S901 and S902. Details are not described herein again.

In this embodiment of this application, an example in which the computing management function is deployed in the access network device (for example, an NG-RAN) and the access network device decides a scheduling result of a computing task is used for description. It should be understood that, in the method provided in this embodiment of this application, a core network (for example, a 5GC) may alternatively decide the scheduling result of the computing task. An implementation process thereof only needs to be slightly modified. For example, the NG-RAN notifies the 5GC of a network status in real time. When determining the scheduling result of the computing task, the 5GC notifies the NG-RAN of a decision result, and the NG-RAN further notifies UE of the decision result. This is not limited.

It may be understood that, in the foregoing embodiments, the methods and/or steps implemented by the first apparatus may alternatively be implemented by a component (for example, a processor, a chip, a chip system, a circuit, a logic module, or software) of the first apparatus, and the methods and/or steps implemented by the computing management function may alternatively be implemented by a component (for example, a processor, a chip, a chip system, a circuit, a logic module, or software) that may be used in the computing management function.

The foregoing mainly describes the solutions provided in this application. Correspondingly, this application further provides a communication apparatus. The communication apparatus is configured to implement various methods in the foregoing method embodiments. The communication apparatus may be the first apparatus in the foregoing method embodiments, an apparatus including the first apparatus, or a component that may be used in the first apparatus, for example, a chip or a chip system. Alternatively, the communication apparatus may be the computing management function in the foregoing method embodiments, an apparatus including the computing management function, or a component that may be used in the computing management function, for example, a chip or a chip system.

It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used.

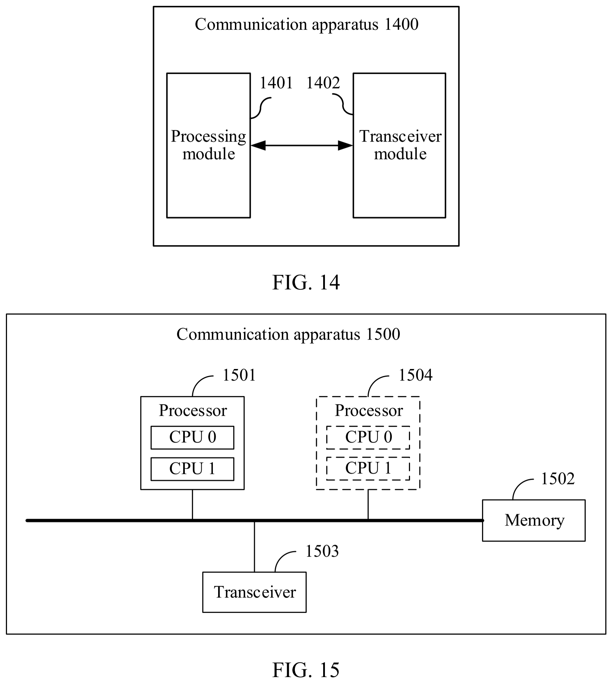

For example, the communication apparatus is the first apparatus or the computing management function in the foregoing method embodiments. FIG. 14 is a diagram of a structure of a communication apparatus according to an embodiment of this application. As shown in FIG. 14, a communication apparatus 1400 includes a processing module 1401 and a transceiver module 1402. The processing module 1401 is configured to perform a processing function of the first apparatus or the computing management function in the foregoing method embodiments. The transceiver module 1402 is configured to perform receiving and sending functions of the first apparatus or the computing management function in the foregoing method embodiments.

All related content of the steps in the foregoing method embodiments may be cited in function descriptions of corresponding functional modules. Details are not described herein again.

The communication apparatus 1400 provided in this embodiment may perform the foregoing computing task scheduling method. Therefore, for technical effects that can be achieved by the communication apparatus 1400, refer to the foregoing method embodiments. Details are not described herein again.

In a possible design solution, in this embodiment of this application, the transceiver module 1402 may include a receiving module and a sending module (not shown in FIG. 14). The transceiver module is configured to implement a sending function and a receiving function of the communication apparatus 1400.

In a possible design solution, the communication apparatus 1400 may further include a storage module (not shown in FIG. 14), and the storage module stores a program or instructions. When the processing module 1401 executes the program or the instructions, the communication apparatus 1400 is enabled to perform a function of the first apparatus or the computing management function in the method shown in FIG. 9.

It should be understood that the processing module 1401 in the communication apparatus 1400 may be implemented by a processor or a processor-related circuit component, and may be a processor or a processing unit; and the transceiver module 1402 may be implemented by a transceiver or a transceiver-related circuit component, and may be a transceiver or a transceiver unit.

For example, FIG. 15 is a diagram of a structure of another communication apparatus according to an embodiment of this application. The communication apparatus may be a first apparatus or a computing management function, or may be a chip (system) or another part or component that may be disposed in the first apparatus or the computing management function. As shown in FIG. 15, a communication apparatus 1500 may include a processor 1501. In a possible design solution, the communication apparatus 1500 may further include a memory 1502 and/or a transceiver 1503. The processor 1501 is coupled to the memory 1502 and the transceiver 1503. For example, the processor 1501 may be connected to the memory 1502 and the transceiver 1503 through a communication bus.

The following describes each component of the communication apparatus 1500 in detail with reference to FIG. 15.

The processor 1501 is a control center of the communication apparatus 1500, and may be one processor, or may be a collective term of a plurality of processing elements. For example, the processor 1501 is one or more central processing units (central processing units, CPUs), may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

In a possible design solution, the processor 1501 may execute various functions of the communication apparatus 1500 by running or executing a software program stored in the memory 1502 and invoking data stored in the memory 1502.

During specific implementation, in an embodiment, the processor 1501 may include one or more CPUs, for example, a CPU 0 and a CPU 1 shown in FIG. 15.

During specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store the software program for executing the solutions in this application, and the processor 1501 controls execution. For a specific implementation, refer to the foregoing method embodiments. Details are not described herein again.

In a possible design solution, the memory 1502 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1502 may be integrated with the processor 1501, or may exist independently, and is coupled to the processor 1501 through an interface circuit (not shown in FIG. 15) of the communication apparatus 1500. This is not specifically limited in this embodiment of this application.

The transceiver 1503 is configured to communicate with another communication apparatus. For example, the communication apparatus 1500 is a terminal device, and the transceiver 1503 may be configured to communicate with a network device or communicate with another terminal device. For another example, the communication apparatus 1500 is a network device, and the transceiver 1503 may be configured to communicate with a terminal device or communicate with another network device.

In a possible design solution, the transceiver 1503 may include a receiver and a transmitter (not separately shown in FIG. 15). The receiver is configured to implement a receiving function, and the transmitter is configured to implement a sending function.

In a possible design solution, the transceiver 1503 may be integrated with the processor 1501, or may exist independently, and is coupled to the processor 1501 through an interface circuit (not shown in FIG. 15) of the communication apparatus 1500. This is not specifically limited in this embodiment of this application.

It should be noted that a structure of the communication apparatus 1500 shown in FIG. 15 does not constitute a limitation on the communication apparatus. An actual communication apparatus may include more or fewer components than those shown in the figure, or combine some components, or have different component arrangement.

In addition, for technical effects of the communication apparatus 1500, refer to technical effects of the computing task scheduling method in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, the disclosed content, and the accompanying claims. In the claims, "comprising" (comprising) does not exclude another component or another step, and "a" or "one" does not exclude a case of "a plurality". A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to this application without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. Therefore, this application is intended to cover these modifications and variations of this application provided that they fall within the scope of the claims of this application and equivalent technologies thereof.

## Claims

1. A computing task scheduling method, wherein the method comprises:
receiving first information, wherein the first information indicates a requirement on a computing task of a first apparatus, and the computing task comprises at least one subtask; and
sending second information in response to the first information, wherein the second information indicates one or more subtasks in the at least one subtask scheduled to a first computing node.

2. The method according to claim 1, wherein the method further comprises:
determining one or more computing nodes and second information corresponding to each of the computing nodes, wherein the one or more computing nodes comprise the first computing node.

3. A computing task scheduling method, wherein the method comprises:
sending first information, wherein the first information indicates a requirement on a computing task of a first apparatus, and the computing task comprises at least one subtask;
receiving third information, wherein the third information comprises an identifier of a first computing node and second information corresponding to the first computing node, and the second information indicates one or more subtasks in the at least one subtask scheduled to the first computing node; and
sending the second information.

4. The method according to claim 3, wherein the first computing node is one of one or more computing nodes that are scheduled to complete the computing task.

5. The method according to claim 4, wherein the one or more computing nodes comprise a second computing node, and the method further comprises:
sending first data to the second computing node, wherein the first data is used to complete a subtask scheduled to the second computing node.

6. A computing task scheduling method, wherein the method comprises:
receiving, by a computing management function, first information, wherein the first information indicates a requirement on a computing task of a first apparatus, and the computing task comprises at least one subtask; and
sending, by the computing management function, second information to a first computing node in response to the first information, wherein the second information indicates one or more subtasks in the at least one subtask scheduled to the first computing node.

7. The method according to any one of claims 1 to 6, wherein the first information further indicates an association relationship between each subtask in the computing task and a previous subtask and/or a subsequent subtask.

8. The method according to claim 7, wherein the association relationship comprises at least one of the following: a data transmission direction, a data transmission rate requirement, a data throughput requirement, a data transmission delay requirement, or a data transmission bandwidth requirement.

9. The method according to claim 7 or 8, wherein the computing task comprises a first subtask, input data of the first subtask is output data of a previous subtask corresponding to the first subtask, and output data of the first subtask is input data of a subsequent subtask corresponding to the first subtask.

10. The method according to any one of claims 1 to 9, wherein the one or more subtasks comprise a second subtask, and the second information corresponding to the first computing node comprises requirement information of the second subtask and association information of the second subtask; and
the requirement information indicates a computing requirement that needs to be met to complete the second subtask, and the association information indicates a transmission requirement between the second subtask and a previous subtask and/or a subsequent subtask corresponding to the second subtask.

11. The method according to claim 10, wherein the requirement information comprises at least one of the following: a computing delay requirement, a computing power requirement, a computing precision requirement, a computing energy consumption requirement, or a priority of the second subtask.

12. The method according to claim 10 or 11, wherein the association information comprises at least one of the following: a data transmission direction between the second subtask and the previous subtask and/or the subsequent subtask corresponding to the second subtask, a data transmission rate requirement between the second subtask and the previous subtask and/or the subsequent subtask corresponding to the second subtask, a data throughput requirement between the second subtask and the previous subtask and/or the subsequent subtask corresponding to the second subtask, a data transmission delay requirement between the second subtask and the previous subtask and/or the subsequent subtask corresponding to the second subtask, a data transmission bandwidth requirement between the second subtask and the previous subtask and/or the subsequent subtask corresponding to the second subtask, position information of a computing node that executes the previous subtask corresponding to the second subtask, or position information of a computing node that executes the subsequent subtask corresponding to the second subtask.

13. The method according to any one of claims 1 to 12, wherein the computing task is represented by using a directed acyclic graph, each vertex in the directed acyclic graph comprises requirement information of one subtask in the computing task, and each edge in the directed acyclic graph comprises association information between one subtask in the computing task and a corresponding previous subtask and/or subsequent subtask.

14. The method according to any one of claims 1 to 13, wherein the requirement on the computing task comprises at least one of the following: a type of the computing task, an input data rate, an output data rate, a computing delay, computing power, computing precision, or computing energy consumption.

15. The method according to any one of claims 1 to 14, wherein the first apparatus and the first computing node are deployed in a wireless communication network.

16. The method according to any one of claims 1 to 15, wherein the first apparatus and the first computing node are terminal devices, access network devices, core network devices, or mobile edge computing platforms.

17. A communication apparatus, wherein the apparatus comprises a processing module and a transceiver module, wherein
the processing module is configured to control the transceiver module to receive first information, wherein the first information indicates a requirement on a computing task of a first apparatus, and the computing task comprises at least one subtask; and
the processing module is further configured to control, in response to the first information, the transceiver module to send second information, wherein the second information indicates one or more subtasks in the at least one subtask scheduled to a first computing node.

18. The apparatus according to claim 17, wherein the processing module is further configured to determine one or more computing nodes and second information corresponding to each of the computing nodes, wherein the one or more computing nodes comprise the first computing node.

19. A communication apparatus, wherein the apparatus comprises a processing module and a transceiver module, wherein
the processing module is configured to control the transceiver module to send first information, wherein the first information indicates a requirement on a computing task of a first apparatus, and the computing task comprises at least one subtask;
the processing module is further configured to control the transceiver module to receive third information, wherein the third information comprises an identifier of a first computing node and second information corresponding to the first computing node, and the second information indicates one or more subtasks in the at least one subtask scheduled to the first computing node; and
the processing module is further configured to control the transceiver module to send the second information.

20. The apparatus according to claim 19, wherein the first computing node is one of one or more computing nodes that are scheduled to complete the computing task.

21. The apparatus according to claim 20, wherein the one or more computing nodes comprise a second computing node; and
the processing module is further configured to control the transceiver module to send first data to the second computing node, wherein the first data is used to complete a subtask scheduled to the second computing node.

22. The apparatus according to any one of claims 17 to 21, wherein the first information further indicates an association relationship between each subtask in the computing task and a previous subtask and/or a subsequent subtask.

23. The apparatus according to claim 22, wherein the association relationship comprises at least one of the following: a data transmission direction, a data transmission rate requirement, a data throughput requirement, a data transmission delay requirement, or a data transmission bandwidth requirement.

24. The apparatus according to claim 22 or 23, wherein the computing task comprises a first subtask, input data of the first subtask is output data of a previous subtask corresponding to the first subtask, and output data of the first subtask is input data of a subsequent subtask corresponding to the first subtask.

25. The apparatus according to any one of claims 17 to 24, wherein the one or more subtasks comprise a second subtask, and the second information corresponding to the first computing node comprises requirement information of the second subtask and association information of the second subtask; and
the requirement information indicates a computing requirement that needs to be met to complete the second subtask, and the association information indicates a transmission requirement between the second subtask and a previous subtask and/or a subsequent subtask corresponding to the second subtask.

26. The apparatus according to claim 25, wherein the requirement information comprises at least one of the following: a computing delay requirement, a computing power requirement, a computing precision requirement, a computing energy consumption requirement, or a priority of the second subtask.

27. The apparatus according to claim 25 or 26, wherein the association information comprises at least one of the following: a data transmission direction between the second subtask and the previous subtask and/or the subsequent subtask corresponding to the second subtask, a data transmission rate requirement between the second subtask and the previous subtask and/or the subsequent subtask corresponding to the second subtask, a data throughput requirement between the second subtask and the previous subtask and/or the subsequent subtask corresponding to the second subtask, a data transmission delay requirement between the second subtask and the previous subtask and/or the subsequent subtask corresponding to the second subtask, a data transmission bandwidth requirement between the second subtask and the previous subtask and/or the subsequent subtask corresponding to the second subtask, position information of a computing node that executes the previous subtask corresponding to the second subtask, or position information of a computing node that executes the subsequent subtask corresponding to the second subtask.

28. The apparatus according to any one of claims 17 to 27, wherein the computing task is represented by using a directed acyclic graph, each vertex in the directed acyclic graph comprises requirement information of one subtask in the computing task, and each edge in the directed acyclic graph comprises association information between one subtask in the computing task and a corresponding previous subtask and/or subsequent subtask.

29. The apparatus according to any one of claims 17 to 28, wherein the requirement on the computing task comprises at least one of the following: a type of the computing task, an input data rate, an output data rate, a computing delay, computing power, computing precision, or computing energy consumption.

30. The apparatus according to any one of claims 17 to 29, wherein the communication apparatus is deployed in a wireless communication network.

31. The apparatus according to any one of claims 17 to 30, wherein the communication apparatus is a terminal device, an access network device, a core network device, or a mobile edge computing platform.

32. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 16 through a logic circuit or by executing code instructions.

33. A computer-readable storage medium, wherein the storage medium stores a computer program or instructions, and when the computer program or the instructions are executed by a communication apparatus, the method according to any one of claims 1 to 16 is implemented.
